# EUROPÄISCHE PATENTSCHRIFT

(11) **EP 4 051 005 B1**
(45) Veröffentlichungstag und Bekanntmachung des Hinweises auf die Patenterteilung: **02.07.2025**
(21) Anmeldenummer: 21729288.7
(22) Anmeldetag: 26.05.2021
(51) Int. Cl.: A01N 59/16, A01P 1/00, A01N 25/34, A01N 25/08, A01N 59/00, A61L 15/18, C09D 5/14, C02F 1/461, C02F 1/72, C02F 1/46

(54) **ANTISEPTISCHE HYBRIDE AUFLAGE ZUR LOKALEN WUNDBEHANDLUNG**
ANTISEPTIC HYBRID LAYER FOR LOCAL WOUND TREATMENT
COMPRESSE HYBRIDE ANTISEPTIQUE POUR LE TRAITEMENT LOCAL DES PLAIES

(30) Priorität: 26.05.2020 EP 20176476; 02.12.2020 EP 20211164
(43) Veröffentlichungstag der Anmeldung: 07.09.2022
(73) Patentinhaber: AGXX Intellectual Property Holding GmbH, 14195 Berlin (DE)
(72) Erfinder: LANDAU, Uwe, 14169 Berlin (DE); MEYER, Carsten, 10589 Berlin (DE); WAGNER, Olaf, 12163 Berlin (DE); ABUL-ELLA, Ayad, 14057 Berlin (DE)
(74) Vertreter: Remus, Alvaro Johannes
(86) Internationale Anmeldenummer: PCT/EP2021/064122
(87) Internationale Veröffentlichungsnummer: WO 2021/239851

(56) Entgegenhaltungen:
- EP-A1- 2 949 325
- WO-A1-2010/072395
- WO-A2-2010/111502
- WO-A2-2012/100100
- DE-A1- 102006 049 108
- MOHIUDDIN A K: "A Thoroughgoing Detail of Surgical Dressings", JOURNAL OF PHARMACEUTICS & DRUG DEVELOPMENT, 1 November 2019 (2019-11-01), pages 1 - 23, XP093033334, Retrieved from the Internet <URL:http://www.annexpublishers.com/articles/JPDD/6101-A-Thoroughgoing-Detail-of-Surgical-Dressings.pdf> [retrieved on 20230321]
- MACGREGOR LISA: "ADÄQUATE ANWENDUNG VON SILBERVERBÄNDEN BEI WUNDEN", WOUNDS INTERNATIONAL, 1 January 2012 (2012-01-01), U.K., pages 1 - 24, XP093033352, Retrieved from the Internet <URL:https://www.icwunden.de/fileadmin/Fachinfos/2012_konsensus_silber.pdf> [retrieved on 20230321]
- UWE LANDAU: "AGXX - Eine nachhaltige Lösung für die Entkeimung wässriger Lösungen", GALVANOTECHNIK, 1 November 2013 (2013-11-01), Germany, pages 2169 - 2184, XP055738114, Retrieved from the Internet <URL:https://www.edelhoff-wire.de/fileadmin/Infocenter/ae-aqua-galvanotechnik-11.2013.pdf> [retrieved on 20201008]
- EMANUEL CLAUSS-LENDZIAN ET AL: "Stress response of a clinical Enterococcus faecalis isolate subjected to a novel antimicrobial surface coating", MICROBIOLOGICAL RESEARCH, vol. 207, 1 March 2018 (2018-03-01), DE, pages 53 - 64, XP055738112, ISSN: 0944-5013, DOI: 10.1016/j.micres.2017.11.006
- A. GURIDI ET AL: "New antimicrobial contact catalyst killing antibiotic resistant clinical and waterborne pathogens", MATERIALS SCIENCE AND ENGINEERING C, vol. 50, 1 May 2015 (2015-05-01), CH, pages 1 - 11, XP055738110, ISSN: 0928-4931, DOI: 10.1016/j.msec.2015.01.080
- ALEXANDER HEISS ET AL: "Enhanced antibacterial activity of silver-ruthenium coated hollow microparticles", BIOINTERPHASES, vol. 12, no. 5, 1 December 2017 (2017-12-01), US, pages 05G608, XP055767777, ISSN: 1934-8630, DOI: 10.1116/1.5003803
- .: "AGXX - keimabtötender Werkstoff für medizinische und wassertechnische Einsätze", 12 June 2013 (2013-06-12), Germany, pages 1 - 3, XP055802113, Retrieved from the Internet <URL:https://www.ibb.de/media/dokumente/foerderprogramme/wirtschaftsfoerderung/profit/profit-praxisbeispiele/profit_beispiele_aus_der_praxis_agxx.pdf> [retrieved on 20210506]
- SCHWARZ ANNA: "Mission Weltraumbakterien", BEUTH - DAS MAGAZIN, 1 September 2019 (2019-09-01), Germany, pages 14 - 17, XP055802157, Retrieved from the Internet <URL:https://www.beuth-hochschule.de/fileadmin/oe/pressestelle/beuth-magazin/2019-2_beuth-magazin.pdf> [retrieved on 20210506]

## Beschreibung

### Gebiet der Erfindung

Der Erfindung betrifft eine hybride Wundauflage zur Behandlung von Wunden der menschlichen oder tierischen Haut, die mindestens ein Trägermaterial umfasst, das zumindest teilweise mit mindestens einem antiseptischen Mittel versehen ist.

Beschrieben ist ferner ein Verfahren zur Herstellung einer hybriden Wundauflage mit antiseptischer Wirkung sowie eine nach diesem Verfahren hergestellte Wundauflage.

### Hintergrund der Erfindung

Wunden entstehen durch Schädigung, Zerstörung oder Durchtrennung der Haut und des darunter liegenden Gewebes. Eine gute Wundheilung ist wichtig, um die Schutzfunktion der Haut wiederherzustellen. Der Körper kann Wunden meist von selbst heilen. Dabei wird das zerstörte Gewebe durch neues ersetzt. Je größer und tiefer eine Wunde ist, desto länger dauert die Heilung der Wunde. Auch das Risiko für Komplikationen, z. B. einer Infektion, ist bei größeren Wunden höher. Wenn die Wundheilung gestört ist, können chronische Wunden entstehen. Neben chronischen Wunden infizieren sich oft auch akute, traumatische Verletzungen. Das Eindringen von und eine Infektion mit pathogenen Keimen kann auch bei Verletzungen der Haut durch chirurgische Eingriffe oder bei nur einfachen Verletzungen nicht ausgeschlossen werden. Dass alle offenen Wunden mit Mikroorganismen kontaminiert sind, bedeutet nicht zwangsläufig, dass Infektionen unausweichlich sind. Aber Wundinfektionen sind ein wesentlicher Faktor für eine verzögerte Heilung [Edwards und Harding 2004]. Die Wundheilung ist ein komplexer Prozess. Das Immunsystem antwortet auf Verletzungen, indem sich die Wunde zunächst entzündet. Der betroffene Bereich schwillt an und schmerzt, wird warm und funktioniert kaum noch. Außerdem rötet sich die Haut rings um die Verletzung, weil sie gut durchblutet wird. Mit dem Blut werden Stoffe herangeführt, die einerseits die Entzündung anfachen, z. B. durch den Botenstoff Zytokin Interleukin-6, als auch solche, die zum Stoppen der Blutung zum Verschluss der Wunde und schließlich der Heilung beitragen. Die Wundheilung verläuft in drei ineinandergreifenden Phasen: (a) Reinigungs- oder Exsudationsphase, (b) Granulations- oder Proliferationsphase und (c) Epithelisierungsphase. Bisherige Theorien zur Wundheilung besagen, dass sich die Zellen der Wundränder oder unmittelbar dahinter liegender Bereiche teilen und die Haut so in die Wunde hineinwächst. Neuere Erkenntnisse gehen aber davon aus, dass sich die Zellen von allen Seiten neu bilden und unter der intakten Haut hindurch auf die Wunde zu schieben. Dort werden sie von nachdrückenden Zellen nach oben gedrückt und reifen zu schildförmigen Zellen aus [Safferling et. al. 2013]. Insgesamt handelt es sich bei der Entzündung um ein komplexes Geschehen mit zahlreichen sich überlappenden Prozesswegen, die noch keineswegs aufgeklärt sind.

Die Behandlung und Heilung von bakteriell kontaminierter Haut und Wunden bzw. von infizierter Haut oder Wunden stellt daher noch eine große Herausforderung für die Medizin und Wissenschaft dar. Wundinfektionen betreffen eine große Anzahl von Menschen (z. B. 2009: 6,5 Mio. Patienten in den USA) und ihre Behandlung verschlingt einen erheblichen Teil der jährlichen Gesundheitskosten (2009: mehr als 25 Milliarden US-Dollar in den USA) [Sen et. al. 2009].

### Stand der Technik

Ausgelöst durch weltweite Zunahme an Antibiotikaresistenzen besteht ein dringender Bedarf an alternativen Substanzen, um einen störungsfreien Verlauf der Wundheilung zu erleichtern und Infektionen effektiv zu bekämpfen. Laut Konsenserklärung zur Wundantiseptik und diversen Empfehlungen vieler medizinischer Fachgesellschaften gelten Lokalantibiotika zur Wundbehandlung als obsolet, da neben einer Resistenzbildung auch lokale Unverträglichkeiten bis hin zu allergischen Reaktionen auftreten können. Problematisch ist auch das oft die Zellproliferation hemmende und zytotoxische Potenzial vieler Antiseptika, das insbesondere bei der Applikation in einer chronischen Wunde die ohnehin verzögerte Wundheilung weiter behindert. Bei infektionsgefährdeten bzw. kritisch kolonisierten und infizierten Wunden wird bei jedem Verbandswechsel eine Spülung mit Lokalantiseptika wie Octenidin- oder Polyhexanid (PHMB)-Lösung empfohlen. Beim Einsatz von Wundauflagen mit keimreduzierendem Wirkstoff ist eine zusätzliche Desinfektion mit Octenidin oder Polihexanid nicht sinnvoll, teilweise auch laut Herstellerangaben nicht gestattet.

In jüngster Zeit sind Wundauflagen auf den Markt gekommen, die aktiv in den Heilungsprozess eingreifen. Die Produkte sollen nicht nur die Wunde feucht halten, sondern die Abheilungsmechanismen unterstützen. In vitro und in vivo Untersuchungen haben gezeigt, dass eine Reihe von modernen Wundauflagen wie Alginate, Hydrokolloide und Hydrofasern zu einer Reduzierung der biogenen Wundbelastung ohne chemisch aktive Zusätze führen können. Alginate können Bakterien in der Verbandsmatrix binden. Hydrokolloide erzeugen eine Umgebung, die feindlich für ein Mikroben-Wachstum ist und ihre okklusive Barriere-Eigenschaften stellen eine wichtige Infektionsschutzfunktion dar. Hydrofasern immobilisieren Bakterien und tragen damit angeblich zur Verringerung der Wund-Biobelastung bei. Ein relativ neues Konzept stellt die hydrophobe Wechselwirkung dar, wobei die Verbandsfasern mit Dialkylcarbamoylchlorid (DACC) beschichtet sind. Dieses physikalische Konzept stellt einen weiteren Mechanismus einer Bakterienbindung dar.

Zu den antiseptischen Technologien, die weniger gefährlich für gesundes Gewebe sind, aber sehr effektiv für die Abtötung pathogener Keime, zählen silberhaltige Wundbehandlungsprodukte. Der Aufbau und die Zusammensetzung silberhaltiger Wundauflagen können je nach Hersteller und Produkt sehr unterschiedlich sein. Sie sind in Form von Alginaten, Hydrofasern, Hydrokolloiden, Wunddistanzgittern, Schaumverbänden und Polyethylen-Geweben erhältlich. Zur Auswahl stehen auch Aktivkohleauflagen mit Silber. Die antimikrobielle Wirksamkeit von Silber beruht auf dem Silberkation (Ag+), das bei Feuchtigkeit durch einen Oxidationsprozess freigesetzt oder aus Salzen abgegeben wird. Silberkationen können an Bakterienzellen andocken und somit die Struktur und die Funktion der Zelle verändern. Silber kann auf verschiedene Weise in Wundauflagen integriert sein: z. B. (a) Silbermetall oder nanokristallines Silber, (b) anorganische Verbindungen wie Silberoxid, Silberchlorid, Silberphosphat, Silbersulfat, Silber-Kalzium-Natriumphosphat, Silber-Zirkonium-Verbindung und Silbersulfadiazin (SSD) oder (c) organische Komplexe wie Silber-Zinkallantoinat, Silberalginat, Silbercarboxymethylcellulose. Hierbei unterscheiden sich die Silber-Wundauflagen auch hinsichtlich der Menge und der Konstanz der Silberionenabgabe. Zu bekannten silberhaltigen Wundauflagen gehören Produkte wie Acticoat, Biatain Ag, Aquacel Ag, Actisorb Silver, Urgotül silver, Suprasorb A + Ag oder Silvercel. Silbersulfadiazin (SSD) wurde in den 70er Jahren des 20. Jahrhunderts als Antibiotikum für Verbrennungen und Wunden eingeführt.

Eine Übersicht der aus dem Stand der Technik bekannten antimikrobiell wirksamen silberhaltigen Wundversorgungsmaterialien wird in DE-A1-19958458 gegeben. In dieser werden Wundauflagen offenbart, die aus einem synthetischen Polymermaterial bestehen, das metallionenhaltige Zeolithe, vorzugsweise mit Silberionen, enthält.

In DE-A1-10328261 wird die Silberbeschichtung einer Seite eines Polyethylen-Netzes und das Laminieren dieses Netzes auf ein Vlies beschrieben, wobei die Silberschicht zum Vlies gerichtet ist. Dadurch soll der Abrieb von Silberpartikeln in die Wunde unter gleichzeitiger Aufrechterhaltung der antimikrobiellen und desinfizierenden Wirksamkeit der Wundauflage verhindert werden.

Die US-A-5753251 und US-A-5681575 beschreiben antimikrobiell wirkende Beschichtungen mit nanokristallinem Silber, die auf ein Medizinprodukt durch Abscheiden von Metallen, beispielsweise Silber aus der Gasphase, appliziert werden.

In der US-A-2934066 wird eine insbesondere mit Silber beschichtete Wundauflage beschrieben, die eine desinfizierende Wirkung aufweisen soll.

Bis auf DE-A1-10328261 sind alle desinfizierenden silberhaltigen Wundauflagen nach dem Stand der Technik so aufgebaut, dass die mit Silber beschichtete Seite zur Wunde gerichtet ist.

Landau (Galvanotechnik 11/2013, 2169-2184) beschreibt einen Grundkörper, beispielsweise in Form von Edelstahldrahtnetzen, welcher durch galvanische Metallabscheidung mit einer Silberbasisbeschichtung versehen wird. Auf die Basisbeschichtung wird ebenfalls auf galvanischem Weg eine mikrostrukturierte, clusterförmige Abscheidung eines weiteren Edelmetalls vorgenommen. Die Oberfläche wird mit einem Vitaminderivat konditioniert, was bei Kontakt mit Wasser bzw. Feuchtigkeit zu einem stark ausgeprägten mikroelektrischen Feld führt. Durch das mikroelektrische Feld wird die elektrische geladene Membran von Mikroorganismen beeinflusst, geschädigt oder zerstört.

Clauss-Lendzian et al. (Microbiological Research 207 (2018), 53-64) beschreiben die Herstellung einer antimikrobiellen Oberflächenbeschichtung bestehend aus mikro-galvanischen Elementen, welche durch mit Silber und Ruthenium beschichtete Edelstahldrahtnetze gebildet werden, was zu einer synergistischen antimikrobiellen Wirkung führt. Durch einen Redox-Cyclus kann sich diese Oberflächenbeschichtung selbst erneuern.

Guridi et al. (Materials Science and Engineering C 50 (2015), 1-11) beschreiben eine antimikrobielle Oberflächenbeschichtung basierend auf mikro- galvanischen Elementen, die aus einem Edelstahldrahtnetz besteht, welche mit Silber und einer mikroporöse Ruthenium-Schicht galvanisch beschichtet wird. Diese Beschichtung wird mit einem Vitamin konditioniert. Zwischen Silber und Ruthenium baut sich ein elektrisches Feld auf, welches zu einem antibakteriellen Effekt führt.

Die EP 2 949 325 A1 offenbart ein Trägermaterial, z. B. ein Verbandmaterial, auf welches eine Silberschicht aufgetragen wird. Anschließend wird eine Rutheniumschicht auf die Silberschicht aufgetragen, wobei mindestens ein Teil der Silberschicht unbedeckt bleiben muss. Die Beschichtung wird mit dem Vitamin Ascorbinsäure konditioniert. Die Beschichtung führt zur Vermiedung von Kontaminationen mit Viren, Bakterien oder Pilzen. Die antimikrobielle Zusammensetzung kann unter anderem in eine Creme, Salbe oder ein Gel eingearbeitet werden.

Die DE 10 2006 049 108 A1 offenbart die Verwendung von bimetallischen Ruthenium-Silber-Partikeln, die mit einem Vitamin aktiviert wurden, zur Beschichtung von Oberflächen. Die beiden Metalle stehen im elektrisch leitenden Kontakt und haben in Anwesenheit von Feuchtigkeit oder Wasser eine antimikrobielle Wirkung.

Heiss et al. (Biointerphases 12 (2017), 05G608) beschreiben silberbeschichtete Glasmikropartikel, die mit Ruthenium unter reduktiven Bedingungen beschichtet wurden. Die mit Ruthenium clusterförmig beschichtete Silberoberfläche zeigt eine antibakterielle Wirkung.

Die WO 2010/111502 A2 offenbart Wundabdeckungen, welche mit galvanischen Partikeln beschichtet sind und antimikrobiell wirken. Die galvanischen Partikel umfassen ein erstes leitfähiges Material und ein zweites leitfähiges Material, wobei sowohl das erste leitfähige Material als auch das zweite leitfähige Material zumindest teilweise auf der Oberfläche freiliegen. Die leitfähigen Materialien umfassen: "Eisen-Silber/Silberoxid", "Eisen-Silber/Silberhalogenid", "Eisen-Silber/Silberchlorid", "Eisen-Silber/Silberbromid" und "Eisen-Silber/Silberiodid".

Die WO 2010/072395 A1 offenbart eine Wundabdeckung, welche eine Trägerschicht und ein absorbierendes Kissen umfasst. Das absorbierende Kissen besteht aus einer ersten und einer zweiten absorbierenden Schicht, wobei die Schichten durch ein dritte Schicht, die mit einem antimikrobiellen Mittel versehen ist, voneinander getrennt sind. Bei der dritten Schicht handelt es sich z. B. um ein Polymernetz oder eine Polymerfolie, welche mit Silber, Silberoxid, einem Silbersalz oder einem Silberkomplex beschichtet ist.

Die Investitionsbank Berlin hat am 12. Juni 2013 ein Projekt veröffentlicht (https://www.ibb.de/media/dokumente/foerderprogramme/wirtschaftsfoerderung/ profit/profit-praxisbeispiele/profit_beispiele_aus_der_praxis_agxx.pdf), das ein antimikrobielles Beschichtungssystem betrifft, das aus einer Silbergrundschicht und einem clusterförmig aufgetragenen Metall aus der Gruppe der Platinmetalle besteht. Durch diese Beschichtung entstehen mikrogalvanische Elemente mit hoher Entkeimungswirkung.

Die Beuth-Hochschule (BEUTH Das Magazin, 2019-2, 14-17) beschreibt eine antimikrobielle Beschichtung aus Silber und Ruthenium, welche unter anderem auf Wundauflagen bzw. Pflastern eingesetzt werden kann. Die Wirkung der Beschichtung ist nicht nur antibakteriell sondern auch antiviral.

Die WO 2012/100100 A2 offenbart eine Wundauflage, welche Kontaminationen von Oberflächen mit biologischem Material, wie Zellen, Mikroorganismen, Proteinen oder Zellkompartimenten, mittels einer glatten, abweisenden Oberfläche vermindert.

Mohiuddin (Journal of Pharmaceutics & Drug Development, Vol. 6(1), 21. November 2019, 101) beschreibt ein Trägermaterial, z. B. Faservlies, das teilweise mit einem antiseptischen Mittel versehen ist und als Wundauflage zur Behandlung der menschlichen und tierischen Haut dient. Das antiseptische Mittel kann beispielsweise ionisches Silber enthalten.

MacGregor (Wounds International (2012), 1-24) beschreibt topische antimikrobielle Wundverbände, die Silber z. B. in Halbleiterform als Silberchlorid enthalten und bei Kontakt mit Wasser eine antibakterielle Wirkung entfalten.

Alle silberhaltigen Wundauflagen wirken durch die mehr oder minder starke Abgabe von Silberionen. Die Beeinflussung mikrobieller Proteine ist auf die hohe Affinität der Silberionen zu funktionellen Gruppen wie Hydroxyl-, Amino-, Carboxyl- und insbesondere Sulphhydrylgruppen der Enzyme in der Zellwand und Strukturproteine zurückzuführen. Silberionen können auch an bakterielle Enzyme binden (Cytochrom a und b) und dadurch Prozesse der Atmungskette blockieren [Guggenbichler et. al. 2008].

Obgleich die bekannten silberhaltigen Produkte mehr oder weniger gut für eine Keimreduzierung in der Wunde sorgen und mit der antimikrobiellen Wirksamkeit einen wichtigen Aspekt einer Wundauflage erfüllen, wird über Beeinträchtigungen bei der Wundheilung durch Silberionen berichtet [Barcikowski et. al. 2012]. Insbesondere wird die Inhibierung der Reepithelisierung durch Silberprodukte hervorgehoben. So kann es bei der Verwendung von Silbersulfadiazin zu einer Beeinträchtigung der Reepithelisierung kommen [Demling et. al. 2001]. Klare Aussagen treffen Burd et. al. (2007) nach vergleichenden Testungen von fünf kommerziell erhältlichen Silberwundauflagen. Sie bewerteten die Zytotoxizität anhand von Einschichtkulturen (Monolayer), Gewebeexplantaten und an einem Wundmodell der Maus. Die Silberverbände Acticoat, Biatain Ag und Aquacel Ag waren hoch zytotoxisch für Keratinozyten und Fibroblasten, während PolyMem Silver und Urgotül SSD weniger zytotoxisch waren. Im Gewebeexplantat, in dem die epidermale Zellproliferation bewertet wurde, hatten alle Silberauflagen zu einer signifikanten Verzögerung der Reepithelisierung geführt. Am Mausmodell kam es nach 7 Tagen durch Acticoat und Biatain Ag zu starker Verzögerung der Wundepithelisation. Diese Ergebnisse wurden von van den Plas et. al. (2008) bestätigt. Beim Vergleich von einer Silberionen freisetzenden Wundauflage mit der silberfreien Kontrolle an Mesh-Graft-Entnahmestellen wurde das Eintreten von > 90 % Reepithelisierung durch Silber abgebende Wundauflagen verzögert. Die Narbenqualität war bei einer Silberionen freisetzenden Wundauflage nach 1-2 Monaten signifikant schlechter und hatte sich erst nach 3 Monaten angeglichen [Innes et. al. 2001]. Die Suche nach antimikrobiellen Wundauflagen mit guter antimikrobieller Aktivität, aber ohne die bei Silber beobachtete Beeinträchtigung der Wundheilung, insbesondere der Reepithelisierung, ist ein aktuelles Thema in der Wundbehandlung.

Silberhaltige Wundauflagen, die in den unterschiedlichsten Darreichungsformen auf dem Markt sind, können daher zwar Infektionen durch in die Wunde eingetragene Keime verhindern, führen aber, wie gezeigt worden ist, zu einer Inhibierung der Reepithelisierung, was eine deutlich verzögerte Wundheilung zur Folge hat.

### Zusammenfassung der Erfindung

Es ist Aufgabe der Erfindung, eine antiseptisch wirksame Wundauflage zu entwickeln, die die Reepithelisierung von akuten Wunden nicht inhibiert, sondern die Wundheilung vielmehr beschleunigt.

Erfindungsgemäß wird die Aufgabe durch eine hybride Wundauflage der eingangs genannten Art gelöst, bei der das antiseptische Mittel zumindest eine erste und eine zweite Metallverbindung umfasst, wobei die erste Metallverbindung mindestens eine halbleitende Verbindung mindestens eines Übergangsmetallelements umfasst, das über mehrere Oxydationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die erste Metallverbindung ein erstes Halbelement eines galvanischen Elementes bildet und die zweite Metallverbindung ein zweites Halbelement des galvanischen Elementes bildet, und wobei die beiden Metallverbindungen zumindest mit ihren jeweiligen Oberflächen miteinander in elektrisch leitendem Kontakt stehen und dadurch eine antiseptische Wirkung entfalten, und wobei die Übergangsmetallverbindung des ersten Halbelements Ruthenium, das in einer oder beiden der Oxidationsstufen VI und IV vorliegt, umfasst. Dieses antiseptische (antimikrobielle und/oder desinfizierende) Mittel ermöglicht eine deutlich verbesserte Behandlung von (offenen bzw. akuten) Wunden, da die Reepithelisierung der Wunde nicht gehemmt und die Wundheilung wirksam unterstützt wird. Im Gegensatz zur Verwendung von rein Silber-haltigen Wundauflagen, wird beim Einsatz der erfindungsgemäßen Wundauflage die Reepithelisierung von akuten Wunden nicht inhibiert, sondern die Wundheilung beschleunigt. Darüber hinaus hat das erfindungsgemäße antiseptische Mittel die vorteilhafte Eigenschaft, die Bildung von Biofilmen in der Wunde zu verhindern oder die Rückbildung bereits entstandener Biofilme ganz oder wenigstens zu bewirken. Da bei chronischen Wunden der Heilungsprozess durch in der Wunde gebildete Biofilme z. T. stark verzögert wird, kann die Wundheilung durch die Anwendung der erfindungsgemäßen Wundauflage auch aus diesem Grunde beschleunigt oder überhaupt erst ermöglicht bzw. in Gang gesetzt werden.

Ruthenium ist ein Edelmetall, das mehrere Oxidationszustände besitzt und aufgrund seiner unterschiedlichen Wertigkeiten in der Lage ist, beispielsweise unterschiedliche Ruthenium-Oxide zu bilden. Oberflächen-Redox-Übergänge wie Ru(VIII)/Ru(VI), Ru(VI)/Ru(IV), Ru(IV)/Ru(III) und möglicherweise Ru(III)/Ru(II) sind die Ursache für die hohe katalytische Aktivität der Ruthenium-Mischverbindungen und deren guten elektrischen Leitfähigkeiten. Die ungewöhnlich ausgeprägten katalytischen und elektrokatalytischen Eigenschaften der Rutheniumverbindungen hängen dabei von der Variation der Oxidationsstufen ab. Die antimikrobielle Wirkung ist beispielsweise besonders hoch bei erfindungsgemäßen Zusammensetzungen, die im ersten Halbelement Ruthenium(VI)-Oxid umfassen.

In vorteilhafter Ausgestaltung der Erfindung ist vorgesehen, dass das Trägermaterial derart ausgebildet ist, dass es für Sauerstoff und Feuchtigkeit durchlässig ist. Das Trägermaterial ist einseitig oder vorzugsweise beidseitig, insbesondere allseitig, mit dem antiseptischen Mittel versehen. Dabei kann das Trägermaterial beispielsweise mit dem antiseptischen Mittel beschichtet sein. Das Trägermaterial kann ferner beispielsweise eine Netz-, Loch-, Poren-, Faser- oder Gewebestruktur aufweisen. Zusätzlich kann das Trägermaterial beispielsweise eine an das Trägermaterial angeheftete, Flüssigkeitaufnehmende Schicht umfassen, vorzugsweise textile Flächenware, bevorzugt aus einem Vlies, Gewebe, Gewirk oder Filz. In vorteilhafter Ausgestaltung der Erfindung ist ferner vorgesehen, dass das Trägermaterial aus Polyethylen, Polyester, Polypropylen, Polyurethan und/oder Cellulose (z.B. Baumwolle) besteht.

Das Trägermaterial für das antiseptische Mittel umfasst vorzugsweise eine flüssigkeits- und sauerstoffdurchlässige Abdeckschicht, insbesondere ein Kunststoffnetz, z. B. ein Polyethylen (PE)-Netz, eine perforierte Polymerfolie, einen Vliesstoff, z. B. Polyesterfaservlies, ein Textilgewebe, z. B. ein Baumwollgewebe, oder einen Polyurethanschaum (PU), z. B. einen offenporigen Polyurethanschaum. Die flüssigkeits- und sauerstoffdurchlässige Abdeckschicht kann einseitig oder beidseitig mit dem erfindungsgemäßen antiseptischen Mittel versehen werden, so dass einerseits der direkte Kontakt mit der Wunde, andererseits aber auch die Keimausbreitung in einer das Exsudat aufnehmenden absorbierenden Schicht des Hybridsystems und eine Rückübertragung der mit dem Exsudat aufgenommenen Keime in die Wunde verhindern kann. Die zur Wunde zeigende antimikrobielle Beschichtung kann erfindungsgemäß zusätzlich mit einer Polymerbeschichtung versehen sein, die das Anhaften der Wundauflage an der Wunde vermeidet, nicht aber die antimikrobielle Wirkung unterbinden soll, z. B. durch eine Polyglycerol (PG)-Beschichtung.

Die erfindungsgemäße hybride Wundauflage kann zusätzlich ein absorbierendes Material umfassen, das beispielsweise in enger Verbindung zum Trägermaterial angeheftet sein kann, um das Wundexsudat, einschließlich der in der Wunde befindlichen Keime, aufzunehmen. Dieses absorbierende Material besteht vorzugsweise aus einer textilen Flächenware, bevorzugt aus einem Vlies, Gewebe, Gewirk, Filz etc. Die eingesetzten Materialien entsprechen den in der Regel für Wundauflagen eingesetzten Fasern und Garnen aus Viskose, Polyethylen, Polypropylen, Polyestern etc. Die angestrebten Flächengewichte einer Flüssigkeit aufnehmenden absorbierenden Schicht sind einerseits abhängig von der vorgesehenen Verwendung und andererseits von der Art der Laminierung. Diese absorbierende Schicht kann auch Träger eines Stoffes sein, der ein feuchtes Klima in/über der Wunde aufrecht hält, z. B. ein Hydrogel.

In vorteilhafter Ausgestaltung der Erfindung ist vorgesehen, dass das antiseptische Mittel mindestens zwei unterschiedliche Schichten umfasst, wobei ein erstes Metall, welches die erste Metallverbindung umfasst, als clusterförmige, nanoporöse und/oder mikrorissige Schicht zumindest teilweise auf eine Schicht eines zweiten Metalls, welches die zweite Metallverbindung umfasst, aufgebracht ist, oder wobei ein zweites Metall, welches die zweite Metallverbindung umfasst, als clusterförmige, nanoporöse und/oder mikrorissige Schicht zumindest teilweise auf eine Schicht eines ersten Metalls, welches die erste Metallverbindung umfasst, aufgebracht ist. Alternativ oder zusätzlich kann das antiseptische Mittel aber auch einzelne Partikel umfassen, wobei mindestens ein Partikel die erste und die zweite Metallverbindung umfasst, und/oder wobei mindestens ein Partikel die erste Metallverbindung und mindestens ein anderes Partikel die zweite Metallverbindung umfasst.

Die beiden Metalle (Halbelemente) können also beispielsweise als Schichtsystem auf der Oberfläche des Trägermaterials aufgebracht sein, wobei die Schicht des einen Metalls zumindest teilweise über der des anderen Metalls liegt. Dabei kann die jeweils obere Schicht porös (insbesondere nanoporös) bzw. mikrorissig, insbesondere clusterförmig, auf das andere Metall aufgetragen bzw. auf diesem abgeschieden sein, so dass die wässrige Lösung bzw. die Feuchtigkeit Zugang zu beiden Halbelementen hat und das galvanische Element kurzgeschlossen wird. Alternativ oder zusätzlich können die beiden Metalle (Halbelemente) aber beispielsweise auch in Form einzelner Partikel auf der Oberfläche des Trägermaterials aufgebracht sein. Dabei kann es sich beispielsweise um Bimetallpartikel, die beide Metalle umfassen, und/oder Metallpartikel, die jeweils nur eines der beiden Metalle umfassen, handeln. Letztere können sequenziell, d.h. erst Partikel des ersten Metalls und dann Partikel des zweiten Metalls (oder umgekehrt), oder gleichzeitig als Gemisch von Partikeln beider Metalle so auf das Trägermaterial aufgebracht werden, dass sie in elektrisch leitendem Kontakt stehen. Die Partikel können einschichtig (nebeneinander liegend) und/oder zumindest teilweise mehrschichtig (übereinander liegend) auf dem Trägermaterial aufgebracht sein.

In weiterer vorteilhafter Ausgestaltung der Erfindung ist auch vorgesehen, dass die erste Metallverbindung mindestens ein Metalloxid, Metalloxyhydrat, Metallhydroxid, Metalloxyhydroxid, Metallhalogenid und/oder mindestens ein Metallsulfid des Übergangsmetallelements umfasst.

In vorteilhafter Ausgestaltung der Erfindung ist ferner vorgesehen, dass der Silberhalbleiter mindestens ein Silberoxid, Silberhydroxyd, Silberhalogenid und/oder Silbersulfid umfasst.

Insgesamt stellt die Erfindung damit ein hybrides, anpassungsfähiges Mehrkomponentensystem aus unterschiedlichen Materialien dar: einem Rutheniumoxid-Halbleiter, der Ruthenium, das in einer oder beiden der Oxidationsstufen VI und IV vorliegt, umfasst, dem Silber-Halbleiter (z. B. Silberoxid, Silberhalogenid oder Silbersulfid) mit oder ohne zusätzlicher, das Anhaften von Wundbestandteilen an der bioaktiven Beschichtung verhindernden polymeren Deckschicht und einer flüssigkeits- und sauerstoffdurchlässigen Abdeckschicht (Trägermaterial) für das antiseptische Mittel. In einer besonderen Ausführungsform ist ein weiteres, flüssigkeitsaufnehmendes absorbierendes Material, mit/ohne feuchtigkeitsabgebende bzw. -aufrecht haltende Beschichtung an das Trägermaterial angefügt bzw. im Trägermaterial verankert. Durch dieses Hybridsystem steht eine breitbandige antiseptische Wundauflage mit hoher Wirksamkeit gegen Bakterien, Viren, Pilze und sonstige Mikroorganismen (im Folgenden zur Vereinfachung als "antiseptisch" bezeichnet) ohne negative Beeinflussung der Reepithelisierung zur Verfügung.

Die erfindungsgemäße Kombination der mindestens zwei Metallverbindungen ist so auf dem Trägermaterial aufgebracht, dass beide Metallverbindungen miteinander in elektrisch leitendem Kontakt stehen und in Form einer Vielzahl von über die wässrige Phase kurzgeschlossenen nano- bzw. mikrogalvanischen Elementen auf der Trägeroberfläche verteilt sind. Die vorliegende Erfindung umfasst somit in vorteilhafter Weise eine antiseptisch wirksame Metallbeschichtung, die jeweils aus einem halbleitenden, katalytisch aktiven Rutheniumoxid-Halbleiter, der Ruthenium, das in einer oder beiden der Oxidationsstufen VI und IV vorliegt, umfasst (Halbelement I eines galvanischen Elementes), und einer halbleitenden, schwer löslichen Silberverbindung (z. B. Silberoxid, Silber-Halogen-Verbindung oder Kombinationen daraus; Halbelement II des galvanischen Elementes) besteht, wobei beide miteinander in direktem, elektrisch leitenden Kontakt stehen. Die hohe katalytische Aktivität des Ruthenium-Halbleiter-Elementes (z. B. Rutheniumoxid-Halbelementes) für die Sauerstoffreduktion ist dabei auf den leichten Wechsel der Oxydationsstufen sowie den leichten Sauerstoffaustausch zurückzuführen, der an den aktiven Zentren der Halbleiteroberfläche bevorzugt stattfindet. Dabei wird das Ruthenium nur in seiner Wertigkeit verändert, wodurch die eigentliche Redox-Reaktion entsteht. Deshalb wird beispielsweise der Rutheniumoxid-Halbleiter nicht verbraucht oder gebildet, sondern nur die Oxidationsstufen verändert. Die Rutheniumverbindung bindet den molekularen Sauerstoff, wodurch dieser katalytisch reduziert werden kann.

Deshalb ist das Vorhandensein von mehreren Wertigkeiten Voraussetzung für die katalytische Wirkung und die Redox-Reaktion. Es muss also keine Rutheniumverbindung gebildet werden. Spezielle Metalloxide bzw. Metallsulfide und schwer lösliche Silberverbindungen weisen katalytische Eigenschaften, eine elektrische Leitfähigkeit und eine hohe Stabilität in Wasser auf. Durch geeignete Materialkombination sind zwei Metallhalbleiter, z. B. Rutheniumoxid und Silberoxid bzw. Silberhalogenid und/oder Silbersulfid miteinander im elektrischen Kontakt, die ein unterschiedliches elektrochemisches Potential besitzen und somit eine galvanische Zelle bilden. Wird diese Zelle über die wässrige Phase/Feuchte kurzgeschlossen, entsteht aufgrund der geringen Distanz (µm-Bereich) zwischen den beiden sich kontaktierenden Metallverbindungen eine hohe elektrische Feldstärke. Diese trägt signifikant zur Keimabtötung bei. An beiden Elektroden des mikrogalvanischen Elementes laufen dabei Redox-Reaktionen ab, die jede für sich zu einer Abtötung der Mikroorganismen führen. Am ersten Halbelement (z. B. der Rutheniumoxid-Kathode) wird molekularer Sauerstoff zu Sauerstoffradikalen reduziert, die dann toxisch auf die Mikroorganismen wirken. Am zweiten Halbelement (Silber-Halbleiter-Anode) werden Elektronen von den Mikroorganismen an den Silberhalbleiter abgegeben und diese dadurch oxidativ zerstört. Die beiden Metalle (Halbelemente) können beispielsweise als Schichtsystem auf der Oberfläche des Wundauflagenträgermaterials aufgebracht sein, wobei die Schicht des einen Metalls zumindest teilweise über der des anderen Metalls liegt. Dabei kann die jeweils obere Schicht porös (insbesondere nanoporös) bzw. mikrorissig, insbesondere clusterförmig, auf das andere Metall aufgetragen bzw. auf diesem abgeschieden sein, so dass die wässrige Lösung bzw. die Feuchtigkeit Zugang zu beiden Halbelementen hat und das galvanische Element kurzgeschlossen wird. Die elektrochemische Potentialdifferenz der auf dem Trägermaterial abgeschiedenen Übergangsmetalle des hybriden Systems ist dabei so eingestellt, dass durch Redox-Prozesse der in der feuchten Umgebung befindliche Sauerstoff reduziert und antimikrobiell aktive Sauerstoffradikale gebildet werden können. Das erfindungsgemäße hybride antimikrobielle Schichtsystem, dessen antiseptische Wirksamkeit nicht auf der Abgabe von Bioziden oder Metallionen, sondern auf der katalytisch unterstützten Erzeugung von Sauerstoffradikalen an einer Edelmetallkombination aus Silber-Ruthenium beruht, verändert seine Zusammensetzung auch bei langzeitiger antimikrobieller Anwendung nicht und benötigt im Gegensatz zu Bioziden oder oligodynamischen Metallen kein Depot oder die Biozid- bzw. Metallionenabgabe regulierende Vorrichtungen. Anders als bei den Bioziden und oligodynamischen Metallen, die für ihre Wirksamkeit toxische Stoffe an die Wunde abgeben müssen, entsteht bei der Verwendung des erfindungsgemäßen antiseptischen Mittels aus den gebildeten Sauerstoffradikalen am Ende nur Wasser. Da es sich bei der Metallkombination um ein katalytisch unterstütztes System handelt, ist deren antiseptische Wirkung in vorteilhafter Weise ausschließlich von der aktiven Oberfläche und nicht wie bei Bioziden oder den oligodynamischen Systemen (Silber, Kupfer und Zink bzw. deren Salze oder Verbindungen) von deren Menge und Auslaugungsgeschwindigkeit abhängig.

In weiterer vorteilhafter Ausgestaltung der Erfindung ist vorgesehen, dass das antiseptische Mittel mit einer Protein abweisenden Beschichtung, insbesondere in Richtung Wunde, versehen ist, die einerseits das Anhaften von Wundbestandteilen an der Wundauflage verhindert, aber die antimikrobielle Wirkung der erfindungsgemäßen Beschichtung nicht blockiert.

In vorteilhafter Ausgestaltung der Erfindung ist ferner vorgesehen, dass die Stärke der antiseptischen Wirkung durch ein Einstellen der Dicke mindestens einer der beiden Metallschichten, der Menge mindestens eines der beiden Metalle und/oder einer der beiden Metallverbindungen, und/oder der Flächenanteile der beiden Metalle auf der Trägermaterialoberfläche gezielt einstellbar ist. Das erfindungsgemäße hybride System kann gezielt hinsichtlich der Stärke seiner antimikrobiellen Wirkung (häufig wird nicht die höchste Wirkung gewünscht, Einstellung per Wachstumskurven) eingestellt werden. Beispielsweise kann durch die Variation des Beschichtungsverfahrens die Dicke der Metallschicht(en) eingestellt werden. Durch die Form des Trägermaterials der Beschichtung kann beispielsweise die katalytisch wirksame antiseptische Schichtoberfläche beeinflusst werden, wie z. B. mit Vliesmaterialien, offenporigen Schäumen oder Geweben, die sehr unterschiedlich große Oberflächen besitzen.

Die oben beschriebene erfindungsgemäße bioaktive Zusammensetzung ist vorzugsweise frei von Ascorbinsäure.

Als Wundauflagenträgermaterial kommen prinzipiell alle eingangs erwähnten Materialien in Frage, vorzugsweise als Flächenware. Vorzugsweise wird als erste Metallschicht ein erstes Metall auf das Trägermaterial aufgebracht, welches mindestens einen elektrisch leitfähigen Silberhalbleiter umfasst. Als zweite Metallschicht wird ein zweites Metall auf die erste Metallschicht aufgebracht, welches z. B. einen Rutheniumoxid-Halbleiter, umfasst, der über mehrere Oxidationsstufen verfügt und über katalytisch aktive Zentren einen Wechsel der Oxidationsstufen erlaubt, wobei das Ruthenium in einer oder beiden der Oxidationsstufen VI und IV vorliegt. Alternativ kann als erste Metallschicht ein erstes Metall auf das Trägermaterial aufgebracht werden, welches Ruthenium umfasst, das über mehrere Oxidationsstufen verfügt und über katalytisch aktive Zentren einen Wechsel der Oxidationsstufen erlaubt, wobei das Ruthenium in einer oder beiden der Oxidationsstufen VI und IV vorliegt. Als zweite Metallschicht wird in diesem Fall ein zweites Metall auf die erste Metallschicht aufgebracht, welches mindestens einen elektrisch leitfähigen Silberhalbleiter umfasst. Bei beiden Alternativen wird die zweite Metallschicht derart durchlässig auf die erste Metallschicht aufgebracht, dass die beiden Metallschichten zumindest mit ihren jeweiligen Oberflächen miteinander in elektrisch leitendem Kontakt stehen und dadurch eine antimikrobielle bzw. antiseptische Wirkung entfalten können (siehe oben).

Zur Herstellung eines erfindungsgemäßen bioaktiven Hybridmaterials kann beispielsweise als erste Schicht Silber mittels Abscheidung aus der Gasphase durch Aufdampfen oder Sputtern und nachfolgend Ruthenium durch Sputtern auf das Trägermaterial abgeschieden werden (PVD-Verfahren). Entsprechend des erfindungsgemäßen Verfahrens ist vorgesehen, dass das jeweilige Metall sequenziell aus einem Silber- und einem Ruthenium-Target oder gleichzeitig mit Hilfe eines Silber-Ruthenium-Legierungstargets abgetragen und auf das Trägermaterial aufgebracht wird. Als Precursor zur Erzielung eines guten Haftgrunds für die beiden bioaktiven Silber- und Ruthenium-Schichten, wird auf das Trägermaterial eine Bekeimung aus Titan, Gold, Al oder Chrom, vorzugsweise aus Titan aus der Gasphase abgeschieden. Bei geeigneter Plasmaaktivierung kann ggf. auf eine haftvermittelnde Precursor-Beschichtung verzichtet werden.

Die Silber- und die Ruthenium-Schicht können auf dem Trägermaterial durch ein Spray-Coating Verfahren abgeschieden werden, wobei die beiden Metalle sequentiell durch die Wahl eines geeigneten Reduktors aus dem auf die Oberfläche gesprühten Elektrolyten zu einer fest auf der Trägeroberfläche haftenden Metallschicht reduziert werden. Als Silbersalz wird vorzugsweise Silbernitrat, als Rutheniumsalz vorzugsweise Ruthenium(III)chlorid verwendet. Als Reduktionsmittel können verschiedene Reduktionsmittel eingesetzt werden, beispielsweise Aldehyde, Ascorbinsäure, Metallhydride (vorzugsweise Natriumborhydrid), Hydrazin und/oder ein Hydraziniumsalz, und/oder Hydroxylamin und/oder ein Hydroxylammoniumsalz.

Die Stärke der antiseptischen Wirkung kann durch ein Einstellen der Dicke mindestens einer der beiden Metallschichten, der Menge mindestens eines der beiden Metalle und/oder einer der beiden Metallverbindungen, und/oder der Flächenanteile der beiden Metalle auf der Oberfläche des Trägermaterials gezielt eingestellt werden. Beispielsweise kann die Stärke der antimikrobiellen bzw. antiseptischen Wirkung der erfindungsgemäßen hybriden Wundauflage durch entsprechende Wahl der Abscheidungsbedingungen für die beiden Metalle auf der Oberfläche des Trägermaterials gesteuert werden, wobei die Flächenanteile der beiden Metalle auf der Hybridoberfläche gegeneinander verändert werden. Die für die gewünschte antiseptische Wirkung des erfindungsgemäßen Hybridmaterials gesuchte Oberflächenzusammensetzung lässt sich anhand geeigneter mikrobiologischer Methoden, wie beispielsweise durch Wachstumskurven, anhand der Variation der Schichtzusammensetzung und des Schichtaufbaus ermitteln. Erfindungsgemäß liegen die Silberschichten insbesondere bei 500 nm, vorzugsweise 100-200 nm, vorzugsweise bei 50 - 100 nm und Ruthenium höchstens 100 nm, insbesondere bei 50 nm, vorzugsweise bei 20 nm, insbesondere zwischen 2 und 10 nm.

Die Erfindung umfasst ferner ein antiseptisches Mittel, das zumindest eine erste und eine zweite Metallverbindung umfasst, wobei die erste Metallverbindung mindestens eine halbleitende Verbindung mindestens eines Übergangsmetallelements umfasst, das über mehrere Oxydationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die erste Metallverbindung ein erstes Halbelement eines galvanischen Elementes bildet und die zweite Metallverbindung ein zweites Halbelement des galvanischen Elementes bildet, und wobei die beiden Metallverbindungen zumindest mit ihren jeweiligen Oberflächen miteinander in elektrisch leitendem Kontakt stehen, und wobei die Übergangsmetallverbindung des ersten Halbelements Ruthenium umfasst, das in einer oder beiden der Oxidationsstufen VI und IV vorliegt, zur Verwendung bei der Behandlung von Wunden der menschlichen oder tierischen Haut.

"Antiseptisches Mittel" im Sinne der Erfindung ist ein Stoff, eine Verbindung und/oder eine Kombination derselben, der bzw. die verwendet wird bzw. werden, um die Infektion einer Wunde zu verhindern oder zu heilen, wobei das antiseptische Mittel eine antimikrobielle, d. h. bakterizide, bakteriostatische, fungizide, fungistatische, desinfizierende und/oder antivirale, Wirkung entfaltet.

"Halbelement" im Sinne der Erfindung bezeichnet einen Teil eines galvanischen Elements, der dieses in Verbindung mit mindestens einem weiteren Halbelement bildet. Ein Halbelement umfasst dabei eine Metallelektrode, die sich zumindest teilweise in einem Elektrolyten befindet.

"Galvanisches Element" im Sinne der Erfindung bezeichnet die Kombination von zwei unterschiedlichen Metallen, die in einem gemeinsamen Elektrolyten jeweils eine Elektrode (Anode bzw. Kathode) bilden. Stehen die beiden Metallelektroden miteinander in direktem Kontakt oder sind sie über einen Elektronenleiter elektrisch leitend miteinander verbunden, gibt das unedlere Metall mit dem niedrigeren Redoxpotential (Elektronendonator, Anode) Elektronen an das edlere Metall mit dem höheren Redoxpotential (Elektronenakzeptor, Kathode) ab und setzt in Folge die Redoxprozesse an den Elektroden in Gang.

"Elektrolyt" im Sinne der Erfindung bezeichnet einen Stoff (z. B. Ionen in wässriger Lösung), der unter dem Einfluss eines elektrischen Feldes durch die gerichtete Bewegung von Ionen elektrischen Strom leitet.

"Metall" im Sinne der Erfindung bezeichnet Atome eines chemischen Elements des Periodensystems der Elemente (alle Elemente, die keine Nichtmetalle sind), die mittels metallischer Bindungen ein Metallgitter und dadurch ein makroskopisch homogenes Material bilden, das sich u.a. durch eine hohe elektrische Leitfähigkeit und eine hohe Wärmeleitfähigkeit auszeichnet. Der Begriff "Metall" umfasst auch Legierungen, die mindestens zwei unterschiedliche Metalle umfassen, Metallverbindungen wie z.B. Metalloxide, Metalloxyhydrate, Metallhydroxide, Metalloxyhydroxide, Metallhalogenide und Metallsulfide, sowie Kombinationen von Metallen und entsprechenden Metallverbindungen.

"Partikel", "partikelförmig" oder "partikulär" im Sinne der Erfindung bezeichnet einzelne teilchenförmige Körper, die als Ganzes gegenüber anderen Partikeln und ihrer Umgebung abgegrenzt sind. Dabei sind im Rahmen der Erfindung alle möglichen Partikelformen und -größen, unabhängig von Geometrie und Masse, eingeschlossen.

"Schicht" oder "schichtförmig" im Sinne der Erfindung bezeichnet eine zwei- oder dreidimensionale Struktur, die eine horizontale Ausdehnung hat und zumindest durch zwei Flächen, die Schichtunterseite und die Schichtoberseite, begrenzt ist. Dabei kann eine Schicht aus einem zusammenhängenden Material bzw. Stoff und/oder sich zumindest teilweise berührenden Partikeln bestehen. Eine Schicht kann im Sinne der Erfindung homogen, heterogen, durchgehend (d.h. ununterbrochen), clusterförmig, nanoporös und/oder mikrorissig ausgebildet sein. "Beschichtet" im Sinne der Erfindung ist ein Material, Partikel oder sonstiger Körper, wenn zumindest ein Teil seiner (äußeren oder inneren) Oberfläche mit einer "Schicht" (siehe oben) versehen ist.

"Topische Behandlung" im Sinne der Erfindung bezeichnet die Anwendung von Wirkmechanismen dort, wo sie therapeutisch wirken sollen, im Gegensatz zur sogenannten systemischen Behandlung, d. h. der Gabe von Arzneimitteln beispielsweise als Infusion oder Tablette. Die topische Behandlung stellt also eine lokale Therapieform dar, die insbesondere in der Dermatologie, der Augenheilkunde, der Hals-Nasen-Ohrenheilkunde und der Frauenheilkunde angewendet wird, d. h. in Bereichen des Körpers, die von außen zugänglich sind, wie beispielsweise Haut, Hornhaut (des Auges) oder Schleimhäute. Topische Behandlungsformen haben den Vorteil, dass die Wirkstoffe oder Wirkmechanismen nur dort wirken, wo sie benötigt werden, während die gesunde Haut bzw. Schleimhaut geschont wird. Durch die lokale Anwendung können darüber hinaus viele systemische Nebenwirkungen vermieden werden.

Der Begriff "Haut" im Sinne der Erfindung umfasst das äußere Organ eines menschlichen oder tierischen Körpers, das u. a. der Abgrenzung des Körperinneren nach außen dient (Deckgewebe). Der Begriff "Haut" umfasst dabei alle Schichten des Organs, insbesondere Epidermis (Oberhaut), Dermis (Lederhaut) und Subcutis (Unterhaut). Im Sinne der Erfindung umfasst der Begriff "Haut" insbesondere auch Schleimhäute und die Oberflächen der Lippen und Schamlippen sowie des Außen- und Mittelohrs.

Der Begriff "Wunde" oder "Wund..." im Sinne der Erfindung umfasst eine Verletzung bzw. einen Defekt der Haut (siehe oben) mit oder ohne Gewebsverlust, die bzw. der durch äußere Gewalt oder als Folge einer Krankheit verursacht wurde.

Die Erfindung wird im Weiteren anhand der folgenden Abbildungen und Beispiele exemplarisch näher erläutert.

### Kurze Beschreibung der Abbildungen

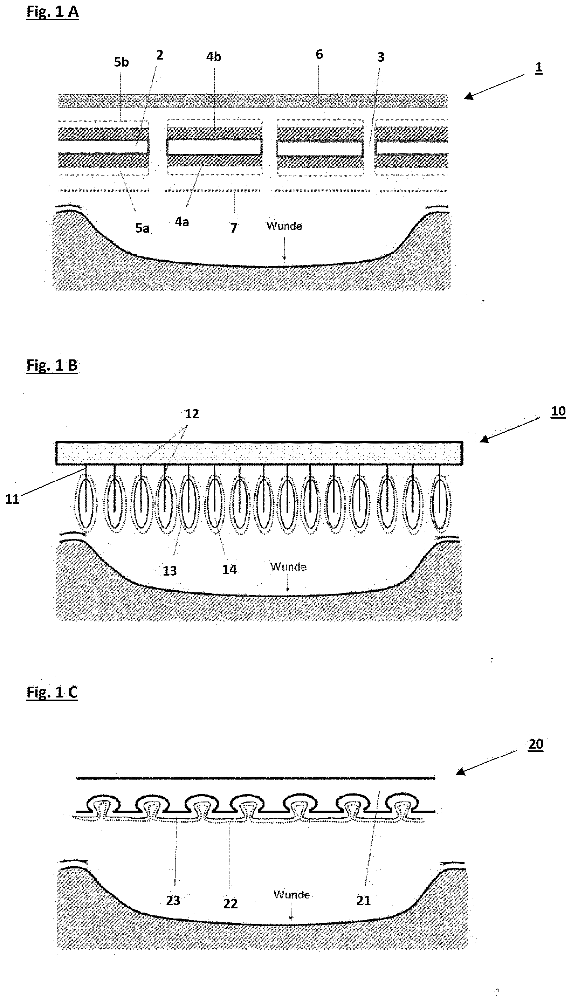

**Figur 1** zeigt schematische Abbildungen von drei beispielhaften Ausführungsformen der erfindungsgemäßen antiseptischen hybriden Wundauflage:
   (a) Beidseitig mit Silber und Ruthenium beschichtetes perforiertes Trägermaterial mit saugfähigem Vliesmaterial auf der der Wundseite abgelegenen Seite;
   (b) Faservlies-Material mit Silber und Ruthenium beschichteten Faserspitzen; und
   (c) Saugfähiges offenporiges Schaummaterial mit Silber und Ruthenium-Beschichtung.
**Figur 2** zeigt beispielhaft fotographische Abbildungen verschiedener Ausführungsformen antiseptisch beschichteter Trägermaterialien, die aus der Gasphase (PVD) mit 350 nm Silber und 60 nm Ruthenium beschichtet worden sind:
   (a) Beschichtetes Polyethylennetz;
   (b) Beschichtetes Baumwollgewebe;
   (c) Beschichtetes Polyestervlies; und
   (d) Beschichteter offenporiger Polyurethanschaum.
**Figur 3** zeigt graphische Darstellungen des Verlaufs der Bildung von Sauerstoffradikalen (ROS) an Silber-Ruthenium-beschichteten Proben in Abhängigkeit von der Ruthenium-Schichtdicke (Silberschichtdicke 350 nm):
   (a) Bildung von Wasserstoffperoxid (H2O2) und
   (b) Bildung von Hydroxyradikalen (OH*).
**Figur 4** zeigt Diagramme eines zeitlich aufgelösten Plaque-Reduktionsassays einer Silber-Ruthenium-PVD - Beschichtung auf einer PE-Folie gegen Feline Coronavirus (FCoV), TCPS ist die Kontrolle bei der das Virus direkt auf der "well-plate" inkubiert wurde (Antivirale Wirkung einer hybriden Silber (100 nm)-Ruthenium (50 nm)-PVD Beschichtung auf Polypropylen (PP)-Plättchen).
**Figur 5** zeigt eine fotographische Abbildung einer Agar-Platte zur Demonstration der antimikrobiellen Wirkung einer Silber (350 nm)-Ruthenium (60 nm)-PVD-Beschichtung mit verschieden dicken Polyglycerol-Beschichtungen im Agar-Test mit einer Suspensionskultur (10⁷/ ml mit 200 µl ausplattiert) mit Bakterien von *E*. *coli* (DSM 498):
   P3: Silber-Ruthenium: PG P1 a
   P4: Silber-Ruthenium: PG P1 b
   P5: Silber-Ruthenium: PG P2 a
   P6: Silber-Ruthenium: PG P2 b
   P7: Silber-Ruthenium: PG P3 a
   P8: Silber-Ruthenium: PG P3 b
   P9: Silber-Ruthenium ohne PG
**Figur 6** zeigt Balkendiagramme zum Biofilmabbau von modellhaft durch
   (a) *Pseudomonas aeruginosa* (ATCC 9027),
   (b) *Staphylococcus aureus* (ATCC 6538) und
   (c) *Candida albicans* (ATCC 10231)
   erzeugte Biofilme durch eine hybride Silber (350 nm)- und Ruthenium (60 nm)-PVD-Beschichtung auf einem Polyesterfaservlies (Debri), Baumwollgewebe (BW) und einem offenporigem Polyurethanschaum (PU).

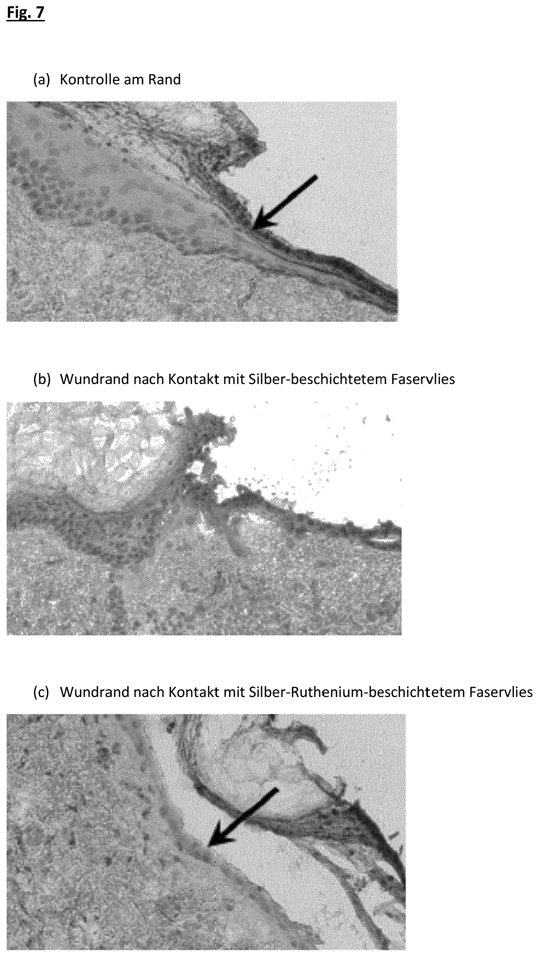

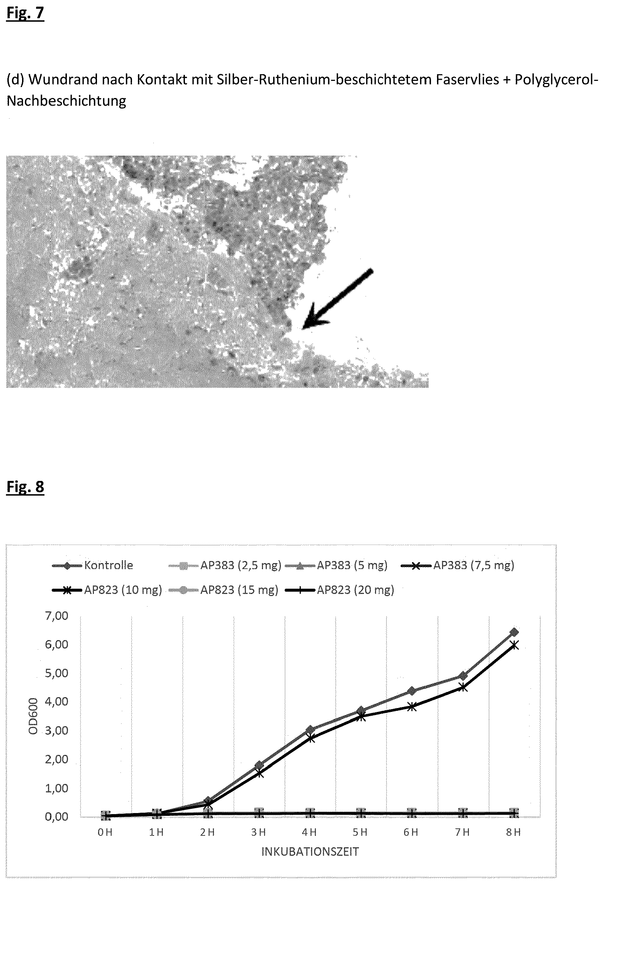

**Figur 7** zeigt fotographische Abbildungen von histologischen Schnitten (Hämatoxylin und Eosin-gefärbt) von mit verschiedenen antiseptischen Mitteln behandelten Wunden aus dem Bereich der Wundränder:
   (a) Kontrolle;
   (b) mit Silber (350 nm) beschichtetes Polyesterfaservlies;
   (c) mit Silber (350 nm) und Ruthenium (60 nm) beschichtetem Polyesterfaservlies; und
   (d) mit Silber (350 nm) und Ruthenium (60 nm) beschichtetem Polyesterfaservlies und einer Polyglycerol (PG)-Nachbeschichtung (verdünnte PG-Lösung (10 mg/mL) und ca. 10 Sek Sprühzeit auf die Silber-Ruthenium-Fasern; PG-Schichtdicke ca. 200 nm).
**Figur 8** zeigt Wachstumskurven von MRSA-Bakterien bei Einsatz von zwei, nach unterschiedlichen Ruthenium-Abscheideverfahren hergestellten, Ruthenium/Ruthenium-Oxid//Silber/Silberchlorid (Ru/RuOx//Ag/AgCl) - Pulvern (AP 383 und AP 823) für verschiedene Pulvermengen.

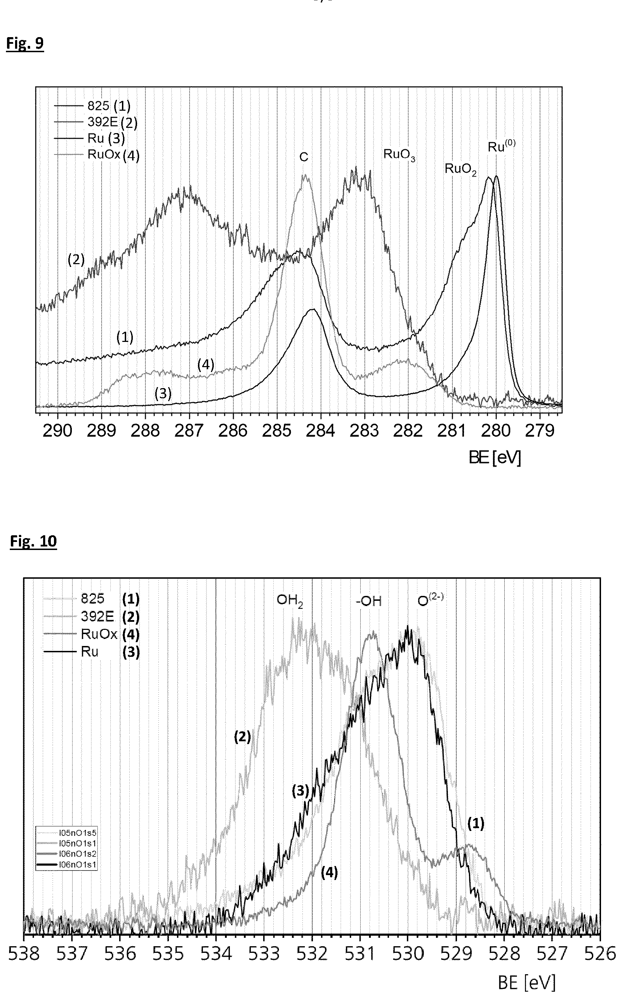

**Figur 9** zeigt eine XPS-Oberflächenanalyse (Ru3d-Spektren) der galvanisch hergestellten Ru/RuOx//Ag/AgCl - Pulverproben 825 und 392 sowie der Ru/RuOx//Ag/AgOx-PVD - Beschichtungen auf Polyethylen-Folien (Proben Ru und RuOx).
**Figur 10** zeigt O1s-Spektren zu den Proben 825, 392, Ru, RuOx.

### Beispielhafte und bevorzugte Ausführungsformen der Erfindung

Die erfindungsgemäße hybride Wundauflage kann beispielsweise auf der Basis eines Trägermaterials hergestellt werden, wobei zunächst eine erste geschlossene Schicht mit einem der beiden erfindungsgemäßen Elektrodenmetalle auf einem flüssigkeits- und sauerstoffdurchlässigen Trägermaterial, vorzugsweise einem Kunststoffnetz, z. B. ein Polyethylen (PE)-Netz, einer perforierten Polymerfolie, einem Vliesstoff, z. B. Polyesterfaservlies oder einem Textilgewebe, z. B. einem Baumwollgewebe, einem Polyurethanschaum (PU), z. B. einem offenporigen Polyurethanschaum, aufgetragen wird. Im Anschluss daran wird das zweite Elektrodenmetall als nicht geschlossene, clusterförmige, poröse oder mikrorissige dünne zweite Schicht auf der ersten Elektrodenschicht aufgetragen. Beispielsweise kann eine SilberBeschichtung vorzugsweise mittels Abscheidung aus der Gasphase durch Aufdampfen oder Sputtern und eine Ruthenium-Schicht durch Sputtern auf das Trägermaterial abgeschieden werden (PVD-Verfahren). Entsprechend des erfindungsgemäßen Verfahrens ist vorzugsweise vorgesehen, dass das jeweilige Metall sequenziell von einem Silber- und einem Ruthenium-Target oder gleichzeitig mit Hilfe eines Silber-Ruthenium-Legierungstargets abgetragen und auf das Trägermaterial aufgebracht wird. Als Precursor zur Erzielung eines guten Haftgrunds für die beiden bioaktiven Silber- und Ruthenium-Schichten, kann zuvor auf das Trägermaterial eine Bekeimung aus Titan, Gold, Al oder Chrom, vorzugsweise aus Titan, aus der Gasphase abgeschieden werden.

Alternativ können insbesondere für nicht saugfähige Trägermaterialien, beispielsweise ein perforiertes Polyethylen (PE)-Netz, die Silber- sowie die Ruthenium-Schicht chemisch-reduktiv über ein Spray-Coating Verfahren sequentiell auf das Trägermaterial aufgetragen werden.

Geeignete Reduktionsmittel sind beispielsweise Aldehyde, Ascorbinsäure, Hydrazin, Hydroxylamin oder Metallhydride und Borane bzw. Natriumborhydrid.

Die optionale Nachbeschichtung des antiseptischen Mittels mit einer polymeren Schicht, die das Anhaften von Wundbestandteilen an der Wundauflage vermeiden soll, kann außerhalb der PVD-Anlage oder in-line bei der Spray-Coating-Anlage erfolgen. Beispielhaft kann als polymere Beschichtung Polyglycerol (PG) oder Polyethylenglycol (PEG) auf die antimikrobielle Silber-Ruthenium-Schicht aufgesprüht werden.

**Figur 1** zeigt schematisch verschiedene Ausführungsformen des erfindungsgemäßen antiseptischen hybriden Wundauflagenaufbaus, dessen Form und Größe maßgeblich von der Geometrie und Struktur des Trägermaterials bestimmt wird. Im Folgenden sind beispielhaft, aber nicht darauf begrenzt, drei verschiedenartige Ausführungsformen dargestellt.

**Figur 1** **A** zeigt ein vorteilhaftes Ausführungsbeispiel einer erfindungsgemäßen Wundauflage (1). In diesem Beispiel ist auf einem Trägermaterial (2), bei dem es sich hier um eine perforierte Folie handelt, die anwendungsgemäß unterschiedliche Porenweiten und Porenstrukturen **(3)** aufweist, eine erste, weitgehend geschlossene Metallschicht **(4 a** bei einseitiger bzw. **4 a** und **4 b** bei beidseitiger Beschichtung), vorzugsweise eine Silberschicht, aufgetragen. Über der ersten Schicht des hybriden Systems ist das zweite Metall, vorzugsweise Ruthenium, als sehr dünne, nanoporöse Schicht **(5 a** bei einseitiger bzw. **5 a** und **5 b)** bei beidseitiger Beschichtung) aufgetragen. Erste **(4 a** bzw. **4 a** und **4 b)** und zweite Schicht **(5 a** bzw. **5 a** und **5 b)** über dem Trägermaterial **(3)** sind so aufgebaut, dass Sauerstoff aus der feuchten Umgebung an dem kathodischen Teil des aufgebrachten antiseptischen Mittels der Hybridoberfläche reduziert wird und Sauerstoffradikale gebildet werden, die an die Wunde (und an ein saugfähiges Vliesmaterial **(6),** siehe unten) gelangen und dort ihre antiseptische bzw. antimikrobielle Wirkung entfalten können. Die metallischen Komponenten der ersten geschlossenen Schicht **(4 a** bzw. **4 a** und **4 b)** und zweiten porösen Schicht **(5 a** bzw. **5 a** und **5 b)** können durch chemische Reaktionen an der Oberfläche jeweils in eine Metallverbindung, z.B. ein Metallhalogenid oder Metallsulfid, umgewandelt werden bzw. durch eine oxidierende Lösung bzw. durch den in der Luft befindlichen Sauerstoff eine Oxidschicht ausbilden bzw. eine bestehende Oxidschicht in eine Mischoxidschicht mit veränderten Wertigkeiten umwandeln. Das hybride Schichtsystem auf dem Trägermaterial **(2)** kann mit einer chemisorbierten polymeren Schicht, beispielsweise einer Polyglycerol-Schicht (PG) **(7),** versehen werden, deren Aufgabe es ist, das Anhaften von Wundbestandteilen zu verhindern, wodurch die antimikrobielle Wirkung der Silber-Ruthenium-Schicht nicht inhibiert wird. Die PG-Schicht **(7)** wird vorzugsweise nur einseitig in Wundrichtung **(4 a** und **5 a)** auf das Silber-Ruthenium-Schichtsystem, z. B. durch Spray-Coating, aufgetragen. Je nach dem benötigten Eigenschaftsprofil, können die PVD- oder durch chemisch-reduktives Spray-Coating abgeschiedenen Metalle und chemisch aufgebrachten Verbindungschichten in ihrer lateralen Verteilung, Dicke und Struktur variabel eingestellt werden. In verschiedenen Ausführungsformen wird die Wundauflage zusätzlich mit einer das Wundexsudat aufnehmenden, saugfähigen Faservliesauflage (6) versehen, die auf der der Wunde abgelegenen Seite platziert wird und das Wundexsudat durch das perforierte Trägermaterial **(2)** aufsaugen soll. Um das Wachstum und die Rückübertragung von mit dem Wundexsudat aufgenommenen Keimen in die Wunde zu verhindern, kann das perforierte Trägermaterial **(2)** auf beiden Seiten mit dem antiseptischen Mittel ausgerüstet werden **(4 a** und **5 a)** sowie **(4 b** und **5 b).** Da Feuchte die Wundheilung begünstigt, wird in vielen Fällen das saugfähige Faservlies noch mit einem Feuchtigkeitsträger versehen, beispielsweise einer Hydrogel-Beschichtung.

In einer weiteren Ausführungsform der erfindungsgemäßen antimikrobiellen Wundauflage **(10),** die in **Figur 1** **B** dargestellt ist, wird das erfindungsgemäße antiseptische Mittel auf den Fasern **(11)** eines Faservlies-Trägermaterials **(12),** z. B. ein Polyesterfaservlies, abgeschieden. Dabei werden die Fasern **(11)** nur teilweise mit einer ersten Metallschicht **(13)** und einer zweiten Metallschicht **(14)** beschichtet, so dass die unbeschichteten Teile der Fasern **(11)** selbst noch genügend Saugkraft für die Aufnahme des Wundexsudats besitzen. Da das Faservlies-Trägermaterial **(12)** eine hohe Saugfähigkeit besitzt, kommt für die Metall - Beschichtung **(13, 14)** in diesem Fall nur eine trockene Beschichtungstechnik aus der Gasphase (PVD) in Betracht.

In einer weiteren Ausführungsform der erfindungsgemäßen antimikrobiellen Wundauflage **(20),** die in **Figur 1** **C** dargestellt ist, wird hier ein offenporiger, saugfähiger Schaum als Trägermaterial **(21),** z. B. aus Polyurethan (PU), mit dem erfindungsgemäßen antiseptischen Mittel, d. h. einem ersten Metall (22) und einem zweiten Metall (23) beschichtet. Wie bei dem Faservliesträgermaterial (12) gemäß Figur 1 B wird der offenporige Schaum **(21)** vorzugsweise mit einem trockenen Beschichtungsverfahren aus der Gasphase (PVD) mit dem ersten **(22)** und dem zweiten **(23)** Metall beschichtet.

In allen Ausführungsformen kann als Antihaftschicht ein geeignetes Polymer, das die Anhaftung von Wundbestandteilen verhindert, aber die antimikrobielle Wirkung des erfindungsgemäßen antiseptischen Mittels nicht negativ beeinflusst, z. B. mit dem Protein abweisenden Polyglycerol (PG) oder Polyethylenglycol (PEG), nachbeschichtet werden. In vorteilhafter Weise führt die polymere Nachbeschichtung mit beispielsweise PG oder PEG dazu, dass beispielsweise eine hydrophobe Metall-Beschichtung, z. B. mit Silber und Ruthenium, hydrophile Eigenschaften erhält. Das ist insbesondere vorteilhaft bei den saugfähigen Trägermaterialien, wie z. B. dem Polyesterfaservlies. Mit der polymeren Nachbeschichtung von erfindungsgemäßen antimikrobiellen Metall-Beschichtung können daher nicht nur Protein abweisende, sondern zusätzlich auch noch hydrophile Eigenschaften erzeugt werden.

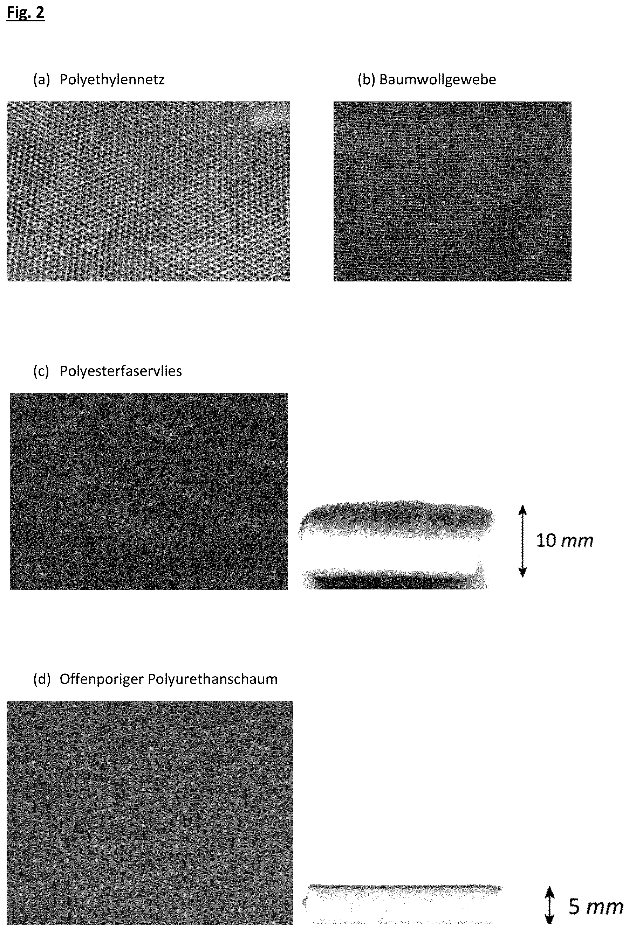

**Figur 2** zeigt unterschiedliche Ausführungsformen der erfindungsgemäßen Wundauflage auf unterschiedlichen Trägermaterialien, die mit ca. 350 nm Silber und ca. 60 nm Ruthenium aus der Gasphase (PVD-Verfahren) beschichtet worden sind. In **Figur 2** **a** ist ein einseitig mit Silber und Ruthenium beschichtetes Polyethylen-Netz zu sehen ist, bei dem sequentiell Silber und Ruthenium aus der Gasphase im Sputter-Verfahren abgeschieden worden sind. In **Figur 2b** ist ein allseitig mit Silber und Ruthenium aus der Gasphase beschichtetes Baumwollgewebe dargestellt. **Figur 2 c** zeigt ein Polyesterfaservlies, das aus der Gasphase mit Silber und Ruthenium beschichtet worden ist. Im Querschnitt (rechts) durch das beschichtete Polyesterfaservliesmaterial ist gut zu erkennen, dass das erste Drittel der zur Wunde gerichteten Polyesterfasern mit Silber und Ruthenium bei der Beschichtung aus der Gasphase mit den beiden Metallen belegt worden sind. Damit können die Fasern noch das Wundexsudat aufsaugen. Gleichzeitig verhindert die antiseptische Faserbeschichtung die Ausbreitung der mit dem Wundexsudat aufgesaugten Mikroorganismen. **Figur 2d** zeigt einen mit Silber und Ruthenium aus der Gasphase beschichteten offenporigen Polyurethanschaum. Im Vergleich zum Polyesterfaservlies wird, entsprechend geringer Porentiefe, eine deutlich kleinere Oberfläche mit der antiseptischen Schicht ausgekleidet, wie im Querschnitt (rechts) zu erkennen ist.

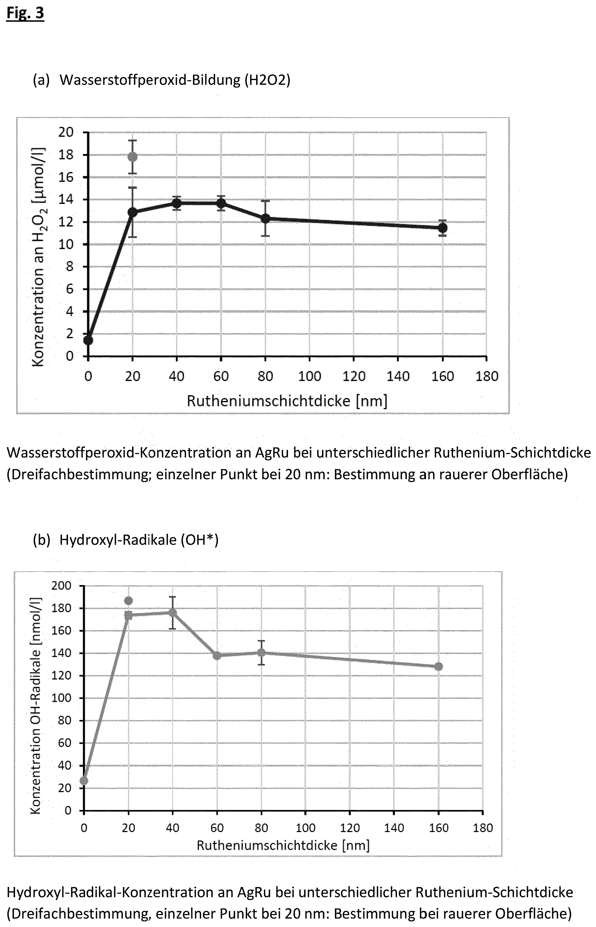

In **Figur 3** **a** ist die an der erfindungsgemäßen Silber-Ruthenium-Oberfläche entwickelte Wasserstoffperoxid-Menge für unterschiedliche Ruthenium-Beschichtungen bestimmt worden. Für die Messung des gebildeten Wasserstoffperoxids wurden mit Silber und Ruthenium beschichtete Bleche (2,5 cm² groß) zu 10 ml einer Lösung von Eisen (II)-Ionen und Xylenolorange gegeben. Die Gefäße mit den Blechen wurden dann für eine Stunde bei 225 U/min auf dem Schüttler inkubiert. Durch die Bildung von Wasserstoffperoxid wurden die Eisen (II)-Ionen oxidiert. Die erzeugten Eisen (III)-Ionen bilden mit Xylenolorange unmittelbar einen farbigen Komplex, dessen Konzentration photometrisch bei einer Wellenlänge von 585 *nm* bestimmt wurde. Wie aus dem ermittelten Kurvenverlauf zu sehen ist, wird bereits bei geringer Ruthenium-Belegung der Silberoberfläche ein hoher H₂O₂-Wert gemessen, der bei höheren Ruthenium-Belegungen der Silberoberfläche einen nahezu konstanten Wert erreicht, der mit weiter steigender Ruthenium-Menge langsam abfällt.

In **Figur 3b** ist die an der erfindungsgemäßen Silber-Ruthenium-Oberfläche gebildete Hydroxylradikal-Konzentration in Abhängigkeit von der Ruthenium-Belegung der Silberoberfläche dargestellt. Für den Nachweis der gebildeten Hydroxyl-Radikale wurde ein fluorimetrisches Verfahren verwendet. Die Methode basiert darauf, dass sich unter Anwesenheit von OH*-Radikalen aus Terephthalsäure (TPA) die fluoreszenzaktive 2-Hydroxyterephthalsäure (HTPA) bildet, die dann fluorimetrisch erfasst werden kann. Die Ansätze wurden im Spektralfluorometer vermessen, wobei zunächst eine Anregung bei 310 nm erfolgte. Die Fluoreszenz der HTPA war danach bei 412 nm messbar. Für die Messung der an Silber-Ruthenium beschichteten Blechen gebildeten OH*-Radikale wurde eine 0,5 mmol/l TPA-Lösung in Phosphatpuffer hergestellt und 0,0165 g/l NaCl hinzugefügt. Die Silber-Ruthenium-Bleche (2,5 cm2) wurden für 72 Stunden in 10 ml der TPA-Lösung inkubiert. Dabei wurde permanent bei 225 rpm gerührt. Wie in **Figur 3b**zu erkennen, wird bereits bei geringer Ruthenium-Belegung der Silberoberfläche eine hohe OH*-Radikal-Konzentration gemessen, die jedoch deutlich kleiner als die H₂O₂-Konzentration ausfällt. Die Hydroxylradikale besitzen allerdings ein sehr hohes Oxidationspotential. Mit steigender Ruthenium-Belegung der Silberoberfläche nimmt die Hydroxyl-Konzentration ebenfalls langsam ab.

In **Tabelle 1** sind die Keimabtötungsergebnisse mit einer Silber-Ruthenium-Beschichtung nach Ph. Eur. 5.1.3 *Efficay of Antimicrobial Preservation* an vier charakteristischen Testkeimen wiedergegeben:
- *Pseudomonas aeruginosa* (ATCC 9027)
- *Staphylococcus aureus* (ATCC 6538)
- *Candida albicans* (ATCC 10231)
- *Aspergillus brasiliens* (ATCC 16404).

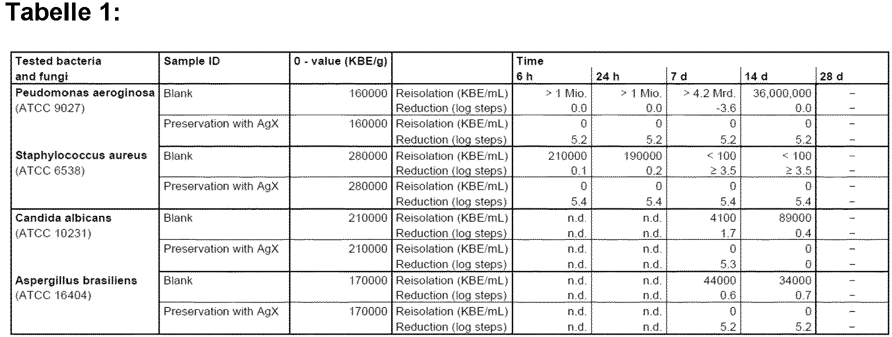

Die Versuche wurden an einem runden Edelstahlgewebe (V2A) (Durchmesser 20 mm) mit einer Maschenweite von 50 µm, das mit der erfindungsgemäßen Silber-Ruthenium-Beschichtung ausgerüstet war, in einer mit 10 ml gefüllten deionisierten Wasser-Lösung mit Zusatzstoffen (3,2 mg Methocel E 4M Premium, 45 mg Sorbit (low endotoxines), 6,1 mg Di-Natriumhydrogenphosphat Decahydrat, 0,75 mg Natriumdihydrogenphosphat) durchgeführt. Dabei wurde das Gewebe auf den Boden des Gefäßes gelegt und das Gefäß mit der antiseptisch beschichteten Probe nur zu Versuchsbeginn und vor der Probenahme geschüttelt. Ansonsten lag das antiseptisch beschichtete Gewebe auf dem Gefäßboden und sollte die zugegebenen Mikroorganismen reduzieren und die Lösung keimfrei halten. Jeder Keim wurde in 6 unabhängigen Versuchen gegen die erfindungsgemäße antiseptische Beschichtung getestet. Außerdem wurde jeweils begleitend ein Versuch ohne das erfindungsgemäß beschichtete Gewebe als Kontrolle mit dem jeweiligen Keim durchgeführt. Wie die Ergebnisse in **Tabelle 1** zeigen, sind *Pseudomonas aeruginosa* und *Staphylococcus aureus* bereits nach 6 h um > 5 log-Stufen reduziert und werden über weitere 14 Tage auf gleicher Stufe keimfrei gehalten. Bei *Candida albicans* und *Aspergillus brasiliens* wurde eine Keimabreicherung von >5 log-Stufen erst nach 1 Woche Versuchsdauer gemessen. Die Ergebnisse zeigen, dass das erfindungsgemäße antiseptische Mittel (antimikrobielle Beschichtung) alle Kriterien erfüllt, die nach der Ph. Eur. 5.1.3 verlangt werden und die hohe antiseptische Effizienz des erfindungsgemäßen Beschichtungssystems demonstriert.

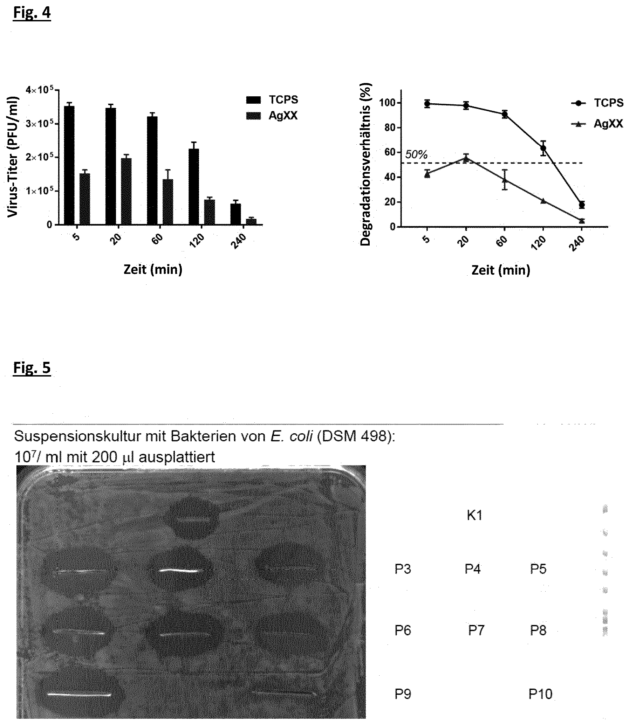

Die **Figur 4** zeigt das zeitlich aufgelöste Plaque-Reduktionsassay der Silber-Ruthenium-PVD-Beschichtung auf Polypropylen gegen den Feline Coronavirus (FCoV). Virus-Plaque-Tests bestimmen die Anzahl der Plaque-bildenden Einheiten (pfu) in einer Virusprobe, die ein Maß für die Virusmenge ist. Dieser Assay basiert auf einer mikrobiologischen Methode, die in Petrischalen oder Multiwell-Platten durchgeführt wird. Ein viraler Plaque wird gebildet, wenn ein Virus eine Zelle innerhalb der fixierten Zell-Monolage infiziert. Die virusinfizierte Zelle lysiert und die Infektion wird auf benachbarte Zellen übertragen, wo sich der Infektion-Lyse-Zyklus wiederholt. Der infizierte Zellbereich bildet eine Plaque (ein Infektionsbereich, der von nicht infizierten Zellen umgeben ist), die mit einem Lichtmikroskop oder visuell sichtbar gemacht werden kann. Plaques werden manuell gezählt, und die Ergebnisse in Kombination mit dem Verdünnungsfaktor, der zur Vorbereitung der Platte verwendet wird, zur Berechnung der Anzahl der Plaquebildungseinheiten pro Probeneinheitsvolumen (pfu/mL) angewendet. Das pfu/mL-Ergebnis stellt die Anzahl infektiöser Partikel innerhalb der Probe dar und basiert auf der Annahme, dass jede gebildete Plaque repräsentativ für ein infektiöses Viruspartikel ist. TCPS ist die Kontrolle bei der das Virus direkt auf dem well-plate inkubiert wurde.

VeroE6-Zellen werden in 12-Well-Platten 1-2 Tage kultiviert bis zur Konfluenz. Die verdünnte Viruslösung wird auf ~500 PFU/mL in Zellkulturmedium hergestellt und davon 500 µL auf die Silber-Ruthenium-Beschichtungsoberfläche bzw. dem well-plate ohne Probe gegeben und bei RT inkubiert. Proben des Mediums werden in zeitlichen Abständen entnommen und auf die Zellen auftragen und bei RT 45 min inkubiert. Die Zellen werden einmal mit PBS gewaschen, um das Medium zu entfernen. Die Zellen werden im Overlay-Medium für 2-3 Tage kultiviert und anschließend mit IF-Färbung versetzt und die Plaques ausgezählt. Der Plaque-Reduktionsassay zeigt, dass die Silber-Ruthenium-PVD Beschichtung die Menge an Feline Coronaviren (FCoV) bereits nach 5 Minuten deutlich reduziert hat. Nach ca. 30 min sind mehr als 50% der Viren deaktiviert.

**Figur 5****:** Um die Verminderung der antimikrobiellen Wirksamkeit der Silber-Ruthenium-Beschichtungen durch PG-Beschichtungen zu testen, wurden galvanisch Bleche (2x2 cm) erfindungsgemäß sequentiell mit Silber und dann Ruthenium beschichtet und anschließend mit 3 verschiedenen Polyglycerin (PG)-Schichtdicken besprüht. Die Silber-Ruthenium-Bleche wurden mit hPG _{5kDa}-(Catechol) _{10%} aufgesprüht als 1 mg/mL Lösung in MOPS Puffer (pH 8.5) und die Proben an Luft getrocknet und vorsichtig in VE-Wasser gewaschen. Mit Hilfe von Ellipsometrie-Messungen wurden die Schichtdicken der aufgesprühten PG-Schichten bestimmt:
PG (1 a, b)*: 35 nm ± 30 nm
PG (2 a, b): 100 nm ± 60 nm
PG (3 a, b): - (~300 nm)
PG (4) Silber-Ruthenium-Beschichtung ohne PG-Beschichtung.
*) je Probe 2 unabhängige PG-Beschichtungen (a, b) bei gleichen Spray-Zeiten.

Die mit PG beschichteten Proben (PG 1-3) wurden im Agar-Test mit *E*. *coli* Bakterien (DSM 498) auf ihre antimikrobielle Wirksamkeit geprüft und gegen die Silber-Ruthenium-Beschichtung ohne PG (PG (4)) verglichen. Wie anhand der Hemmhöfe abzulesen ist, wird bei allen drei PG-Schichtdicken (P3-8) im Vergleich zur unbeschichteten Silber-Ruthenium-Probe (P9) kein merklicher Unterschied in der Größe des Hemmhofes und damit in der antimikrobiellen Wirksamkeit festgestellt. PG-Nachbeschichtungen sind daher als Protein abweisende Schutzbeschichtung für eine erfindungsgemäße Wundauflage auf Basis einer Silber-Ruthenium-Beschichtung geeignet.

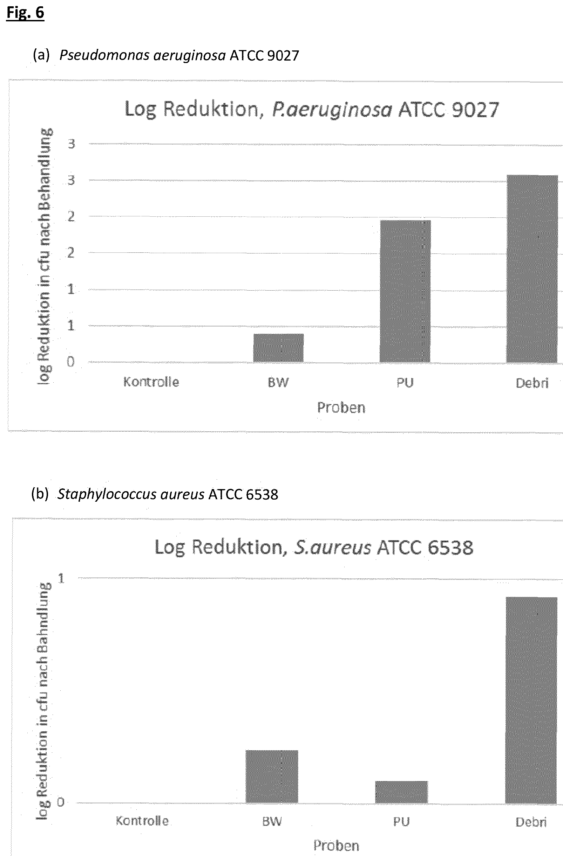

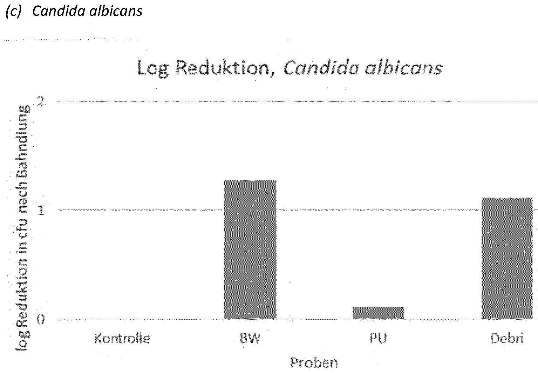

In **Figur 6** sind die Ergebnisse dargestellt, die an einem Biofilmmodell, das für Wundreinigungen verwendet wird, mit der erfindungsgemäßen Wundauflage mit Silber-Ruthenium-PVD-Beschichtung eines Polyesterfaservlies (Debri), eines Baumwollgewebes (BW) und eines offenporigen Polyurethanschaumes (PU) gewonnen worden sind. Das Biofilmmodell wurde speziell für diese Anwendung (Debridement) entwickelt. Daher wurde das erfindungsgemäß beschichtete antiseptische Polyesterfaservlies nicht auf dem Biofilm inkubiert, sondern ein biofilmzerstörender Effekt wurde direkt während des Debridements (~ 2 Minuten) evaluiert. Die Bakterien werden überschichtet und danach einem mechanischen Debridement ausgesetzt. Unmittelbar nach dem Debridement wurde die verbliebene Schicht homogenisiert und 1:10 verdünnt. Aus dieser 1:10 Verdünnung werden weitere Verdünnungen plattiert und die Bakterien ausgezählt, um die Keimreduktion nach dem Debridement zu ermitteln. Als Testkeime wurden:
- *Pseudomonas aeruginosa* (ATCC 9027)
- *Staphylococcus aureus* (ATCC 6538)
- *Candida albicans* (ATCC 10231)
eingesetzt. Die Ausgangskeimzahl von 10⁵ CFUs/mL sind realistische Keimbelastungen für eine besiedelte chronische Wunde.

Die Ergebnisse in **Figur 6a-c** zeigen, dass nach dieser Testmethode bereits durch eine kurze Kontaktzeit (2 min) eines erfindungsgemäßen antiseptischen Mittels (Silber-Ruthenium-Beschichtung) mit dem künstlich hergestellten Biofilm eine deutliche Reduktion des Biofilms mit allen Trägermaterialien erreicht worden ist. Die gramnegativen *Pseudomonas aeruginosa* Bakterien sind beim Polyesterfaservlies-Trägermaterial um 3 log-Stufen reduziert worden **(****Figur 6a)** beim PU-Schaum um 2 log-Stufen **(****Figur 6a)**Die grampositiven *Staphylococcus aureus* Bakterien konnten mit dem Polyesterfaservlies (Debri) um 1 log-Stufe verringert werden **(****Figur 6b)**Auch bei der Entfernung des durch *Candida albicans* erzeugten Biofilms konnte eine Reduktion von z. T. > 1 log-Stufe erreicht werden **(****Figur 6c)** . Die Unterschiede in den Keimzahlreduktionen sind neben den unterschiedlichen Keimarten auch auf die experimentelle Durchführung mit den verschiedenen Trägermaterialstrukturen zurückzuführen, die einen vollständig vergleichbaren Kontakt zum Biofilm nicht herstellen können.

Die Untersuchungsergebnisse der erfindungsgemäße Wundauflage mit Silber-Ruthenium-Beschichtung haben hinsichtlich der antiseptischen Wirksamkeit und der Fähigkeit, einen bestehenden Biofilm wieder partiell zurückbilden zu können, gezeigt, dass zwei wesentliche Merkmale einer wirksamen Wundauflage durch eine Silber-Ruthenium-Beschichtung erfüllt werden. Von einer modernen Wundauflage wird jedoch auch verlangt, dass sie die Wundheilung unterstützt, auf keinen Fall aber inhibiert. Um die Auswirkungen der erfindungsgemäßen Wundauflage auf die Reepithelisierung der Wunde zu untersuchen, wurden die Versuche ex vivo an nicht infiziertem humanen Wundmaterial von gesunden Freiwilligen aus der kosmetischen Chirurgie durchgeführt. Die entnommene Haut (1,5x1,5 cm) wurde so behandelt, dass eine Wunde von ca. 5 mm Durchmesser und ca. 1 mm Tiefe entstand. Die Hautexplantate wurden dann auf einen Einsatz (8 µm Poren) gelegt, und im unteren Kompartiment des Hautmodells wurden 2 mL 1640 RPMI-Zellkulturmedium mit Zusätzen hinzugefügt.

Die verletzte Haut wurde mit folgenden Polyesterfaservlies-Proben behandelt:
(a) Kontrolle = unbehandelte Wunde
(b) Ag = mit Silber aus der Gasphase beschichtetes Polyesterfaservlies (Ag-Schichtdicke ca. 350 nm)
(c) Ag-Ru = mit dem erfindungsgemäßen Silber und Ruthenium PVD beschichtetes Polyesterfaservlies (Ag: ca. 350 nm, Ru: ca. 60 nm)
(d) Ag-Ru-PG = mit dem erfindungsgemäßen Silber und Ruthenium PVD beschichtetes Polyesterfaservlies (Ag: ca. 350 nm, Ru: ca. 60 nm) + Polyglycerol (PG, ca. 200 nm)).

Die Wundauflagen wurden 30 Sekunden lang vor dem Auftragen auf die Wunde in PBS-Lösung eingetaucht. Die Proben wurden bei 37°C, 5 % CO2 und 100 % Luftfeuchtigkeit inkubiert. Nach 24 und 48 Stunden wurden 500 mL des Zellmediums gesammelt und durch frisches ersetzt. Entzündungsmarker (IL-6 und IL-8) wurden in dem nach 24 und 48 h gesammelten Medium mittels ELISA-Kits (CytoSetTM, Invitrogen Corp., Carlsbad, CA, USA) gemessen. Die Werte wurden normalisiert in Bezug auf den Gesamtgehalt an löslichem Protein, bestimmt durch das Pierce 660 nm-Protein-Assay (Thermo Scientific Inc., Rockford, IL, USA). Alle Kits wurden gemäß den Empfehlungen des Herstellers verwendet. Die Absorptionswerte wurden mit einem Plattenlesegerät (EnSpire1Multimode Perkin Elmer, Akron, OH, USA) gemessen.

Nach 8 Tagen Inkubation (das Zellmedium wurde alle 2-3 Tage gewechselt) wurde die Haut in Gefriermedium eingebettet und in flüssigem Stickstoff eingefroren. Hautschnitte wurden präpariert und mit Hämatoxylin und Eosin (H&E) gefärbt, um die Zellmorphologie, Reepithelisierung und eventuelle Toxizität zu untersuchen.

In **Figur 7a-d** sind die Wund-Epithelisierungs-Ergebnisse für die verschieden beschichteten Polyesterfaservlies-Wundauflagenmaterialien anhand von histologischen Schnitten wiedergegeben. In der unbehandelten Wunde **(****Figur 7a)** hatte sich an den Rändern der Wunde ein neues Epithel gebildet (Pfeil). In den mit der Silber-Wundauflage behandelten Proben wurde keine Regeneration einer neuen Epidermisschicht beobachtet. Es konnten fast nekrotische Zellen mit morphologisch veränderten Zellkernen beobachtet werden **(****Figur 7b)** **.** Bei Wunden, die mit der erfindungsgemäßen Wundauflage mit Silber-Ruthenium-Beschichtung **(****Figur 7c)** sowie der erfindungsgemäßen Wundauflage mit Silber-Ruthenium-Beschichtung und zusätzlichem PG-Coating **(****Figur 7d)** behandelt wurden, wurden an den Wundrändern neue, sich bildende Zellschichten beobachtet (Pfeile), deren Wachstum ähnlich wie bei der unbehandelten Probe (Kontrolle) ist. Das bedeutet, dass die erfindungsgemäß antiseptisch beschichteten Polyesterfaservlies-Wundauflagen die Bildung eines neuen Epithels, im Gegensatz zu den Silber-Wundmaterialien, nicht blockiert. Interessanterweise wird durch eine zusätzliche, Protein abweisende, PG-Beschichtung die Epithelbildung ebenfalls nicht nachteilig gegenüber der Beschichtung ohne PG beeinflusst. Die überraschende bessere Verträglichkeit der erfindungsgemäßen Silber-Ruthenium-Wundauflage ist ein entscheidender Vorteil gegenüber den Silber-Wundauflagen, was besonders für großflächige Brandwunden gilt, wo bekannt ist, dass Silber zwar die Infektion verhindert, aber gleichzeitig toxisch Effekte auf die Haut und gegenüber andere Organen zeigt.

Voraussetzung für Untersuchungen von Wundinfektionen und der Suche nach neuen Wegen für deren Behandlung sind sinnvolle Modellsysteme. Maus-, Meerschweinchen-, Ratten- und Kaninchen-Modelle zählen zu den am häufigsten verwendeten *in vivo* Wundmodellen. Allerdings begrenzen die anatomischen und physiologischen Unterschiede im Vergleich zur menschlichen Haut die Brauchbarkeit als Modell für die Analyse eines realistischen Wundinfektionsgeschehens [Schaudinn et al 2017]. Ex vivo menschliche Haut, die aus der kosmetischen Chirurgie bezogen wird, kommt bereits seit Jahren für modellhafte Untersuchungen zur Hautphysiologie und Arzneimittelhautdurchlässigkeit zum Einsatz [Thompson et. al. 2015, Berthet et. al. 2017]. Auf dieser Basis wurden Studien an ex vivo menschlicher Haut für Untersuchungen von Haut-Immunzellen und deren Wechselwirkung mit topisch applizierten Nanopartikeln eingesetzt [Rancan et. al. 2014, Rancan et. al. 2017]. Das ex vivo menschliche Hautmodell der Charite' [Rancan 2019] wurde zur Untersuchung der erfindungsgemäßen antiseptischen Wundauflagen mit Silber-Ruthenium-Beschichtung verwendet, um die Wirkung der erfindungsgemäßen antiseptischen Beschichtung auf eine künstlich an menschlicher Haut hervorgerufene Wunde zu ermitteln. Überraschender Weise hat sich bei diesen Untersuchungen am Explantate-Wundmodell, das mit menschlicher Haut aus der kosmetischen Chirurgie arbeitet, gezeigt, dass eine erfindungsgemäße Wundauflage mit einem hybriden Schichtsystem aus einer Silberhalbleiter-Schicht und einer darüber befindlichen nano- bzw. mikroporösen Rutheniumoxid-Halbleiter-Schicht das Epithelwachstum, im Gegensatz zu Silberionen freisetzende Wundauflagen, nicht hemmt.

**Figur 8** zeigt die Wachstumskurven von MRSA-Bakterien, bei denen die beiden Ruthenium-/Ruthenium//Silber/Silber-Oxid-Oxid-Pulver mit verschiedenen Pulvermengen eingesetzt worden sind. Ruthenium kann mit unterschiedlichen starken Reduktionsmitteln (z. B. NaBH₄, N₂H₄) auf direktem, einstufigen Weg chemisch-reduktiv, beispielweise auf Silberoberflächen, abgeschieden und entsprechend Ruthenium/Ruthenium-Oxide auf der Silberoberfläche aufgetragen werden. Ruthenium/Ruthenium-Oxide können aber auch in einem zweistufigen Verfahren abgeschieden werden, wobei im ersten Schritt zunächst eine Aufoxidation von Ruthenium erfolgt und erst im zweiten Schritt die Reduktion des aufoxidierten Rutheniums zu Ruthenium und Ruthenium-Oxiden durchgeführt wird. Es war zu erwarten, dass die unterschiedlichen Verfahrenswege zur Ruthenium/Ruthenium-Oxid-Abscheidung auf Silberpartikeln zu einer vergleichbaren antimikrobiellen Wirksamkeit führen. Überraschender Weise wurde jedoch beim zweistufigen Verfahren eine um fast eine Größenordnung stärkere antimikrobielle Wirkung des Silber/Silber-Oxid//Ruthenium/Ruthenium-Oxid gegen S. aureus (MRSA) und P. aeruginosa im Vergleich zum direkten, einstufigen Ruthenium-Abscheideprozess festgestellt. Anders als bei der direkten, einstufigen Reduktion der Ru(III)-Ionen durch ein starkes Reduktionsmittel, beruht das indirekte, zweistufige Verfahren auf der Oxidation von Ru(III)-Ionen zu Ruthenium(VIII)-oxid [Chen 2011]. RuO₄ ist ein starkes Oxidationsmittel, das durch geeignete Reduktionsmittel in Ruthenium(IV)-oxid überführt wird, wobei das Substrat mit einer Schicht an Ruthenium(IV)-oxid überzogen wird. Die Oxidation von Ru(III)-Ionen zum RuO₄ erfolgt durch Natriumhypochloridt. Zur Stabilisierung von RuO₄ wird der Prozess in alkalischem Medium durchgeführt. Die Reduktion zum RuO₂ erfolgt durch Natriumnitrit.

### Präparation halbleitender Silber/Silber-Oxid//Ruthenium/Ruthenium-Oxid-Pulver durch chemisch-reduktive Abscheidung von Ru/RuOₓ auf Silberpartikeln nach einem indirekten, zweistufigen Verfahren zur Ruthenium-Abscheidung (AP 383):

Es wurden 50 g Silberpulver (Toyo Chemical Industrial, SBA10M27) in einem 2000 ml Dreihalskolben im Ultraschallbad mit 1000 ml deionisiertem Wasser aufgeschlämmt. Eine zusätzliche Rührung erfolgte mit dem KPG-Rührer bei 300 U/min. Nach 2 h wurde die braune Suspension durch Abdekantieren in einen weiteren 2000 ml Dreihalskolben überführt. Im Ultraschallbad und unter Rührung mit dem KPG-Rührer wurden 10 ml Ru(NO)(NO₃)₃-Lösung (10,83 g/l) zugesetzt. Dann wurde der Suspension eine Mischung folgender Lösungen hinzugesetzt:
300 ml NaClO-Lösung (14 %),
100 ml NaOH-Lösung (10 g/l),
87,5 ml NaNO2-Lösung (10 g/l).

Das Silberpulver färbte sich umgehend dunkel. Die Suspension wurde anschließend noch für 1 h im Ultraschallbad gerührt. Nach dem Sedimentieren des beschichteten Pulvers wurde der gelbe Überstand abdekantiert. Das Pulver wurde mit deionisiertem Wasser aufgenommen und abfiltriert. Nach dem Waschen mit deionisiertem Wasser wurde das Pulver mit Ethanol aufgenommen, abfiltriert und im Trockenschrank bei einer Temperatur von 60 °C getrocknet.

### Antimikrobielle Wirkung:

Überraschenderweise zeigen Silber/Silber-Oxid//Ruthenium/Ruthenium-Oxid-Pulver, bei denen das Ruthenium-Oxid im einstufigen bzw. zweistufigem Verfahren chemisch-reduktiv abgeschieden wurden, bei der antimikrobiellen Prüfung gegen MRSA-Bakterien (grampositiv) auffallend große Unterschiede. Silber/Silber-Oxid//Ruthenium/Ruthenium-Oxid-Pulver (AP823), die durch direkte Ruthenium-Reduktion auf Silberpartikeln mit dem starken Reduktionsmittel Natriumborhydrid (NaBH4) abgeschieden wurden, wiesen eine um nahezu eine Größenordnung geringere antimikrobielle Wirkung im Vergleich zu Silber/Silber-Oxid//Ruthenium/Ruthenium-Oxid-Pulvern (AP383) nach dem zweistufigen Verfahren auf. **Figur 8** zeigt die Wachstumskurven von MRSA-Bakterien, bei denen die beiden Ruthenium-/Ruthenium-Oxid//Silber/Silber-Oxid-Pulver mit verschiedenen Pulvermengen eingesetzt worden sind. Wie aus dem Verlauf der Wachstumskurven hervorgeht, zeigt das zweistufig hergestellte Silber/Silber-Oxid//Ruthenium/Ruthenium-Oxid-Pulver (AP383) bereits bei einer Einwaage von 2,5 mg Pulvermenge eine vollständige Abtötung der MRSA-Bakterien, wohingegen beim einstufig hergestellten Silber/SilberOxid//Ruthenium-/Ruthenium-Oxid-Pulver (AP823) die vollständige Abtötung erst bei 15 mg Pulvermenge erreicht wurde. Es zeigte sich also, dass bei der 2-stufigen Ruthenium-Abscheidung die antimikrobielle Wirksamkeit deutlich gegenüber dem 1-stufigen Verfahren erhöht ist, was daran zu erkennen ist, dass für eine vollständige Keimabtötung über die gesamte Versuchszeit von 8 h bei der Probe 383(vegleichbare Ru-Abscheidemethode wie 392) nur 2,5 mg Pulver und bei der Probe 823 > 10 mg benötigt werden, also um ca. das 4-6-fache weniger. Ein vergleichbar großer Unterschied in der antimikrobiellen Wirkung (ca. eine Größenordnung) wurde bei Untersuchungen der antimikrobiellen Wirkung beider Pulverarten (AP823) und (AP383) gegen P. aeruginosa PA 14 (gramnegativ) festgestellt.

Die antimikrobielle Wirkung ist besonders hoch bei Proben, die im ersten Halbelement Ruthenium (VI)-Oxid enthalten **(Tabelle 2).** Offensichtlich kann das Ruthenium(VI)-Oxid sowohl bei einer elektrochemischen wie bei der PVD-Abscheidung von Ruthenium erzielt werden, wenn bei der Ruthenium-Abscheidung ein Prozessschritt mit starker oxidativer Wirkung vorliegt (392 und RuOx). Die XPS-Oberflächenanalysen weisen auf eine Korrelation zwischen der antimikrobiellen Wirkung und der Zusammensetzung der Ruthenium-Oxide hin, wobei es möglicherweise auf ein bestimmtes Verhältnis von Ruthenium (VI) Oxid/Ruthenium (IV) Oxid ankommt. In jedem Fall ist das Vorhandensein von Ruthenium(VI)-Oxid für die erhöhte antimikrobielle Wirkung vorteilhaft oder gar notwendig.

**Tabelle 2: XPS-Analysenergebnisse - Herstellverfahren-Antimikrobielle Wirksamkeit**

| ProbenBezeichnung | Basismaterial | Ruthenium-Abscheideverfahren | Chemische Zusammensetzung (XPS- 3d Spektren) * | | | Antimikrobielle Wirksamkeit |
|---|---|---|---|---|---|---|
| | | | Ru(0) | RuO2 | RuO3 | |
| 825 | Silberpartikel | Chemisch-Reduktiv Direktreduktion | 280, 1eV | 280,7 eV | n. d. | ++ |
| | | | ++++ | ++++ | | |
| 392/383 | Silberpartikel | Chemisch-Reduktiv | Sehr geringer Anteil | Im breiten roten Peak RuO2 enthalten (hydratisiert). | 282,9 eV | |
| | | 2-stufig | | | | |
| | | Stufe 1: Oxidation | | | | |
| | | Stufe 2: Reduktion | | | | |
| | | | | Substantieller Anteil ist RuO3 | | |
| | | | + | ++ | +++ | ++++ |
| "Ru" | PE-Folie | PVD-Sputtern | 280,0 eV | Geringer Anteil im Ru(0)-Peak | | |
| | | | ++++ | + | n. d. | ++ |
| "RuOx" | PE-Folie | PVD-Reaktives Sputtern (Oxidativ) | | | 282, 1 eV | |
| | | | + | n.d. | ++++ | ++++ |

| | | | | | | |
|---|---|---|---|---|---|---|
| *) Referenzspektrum: Silber (Die Bindungsenergien der hoch aufgelösten Spektren wurden mit Hilfe der Ag3d_Spektren korrigiert | | | | | | |

### Literatur-Bindungsenergien (eV):

- Ru (0): Ru 3d: 280, 2 eV; J. F. Moulder, W. F. Stickle, P. E. Sobol and K. D. Bomben: Handbook of X Ray Photoelectron Spectroscopy: A reference of Standard Spectra for identification and interpretation of XPS Data, J. Chastain and J. R. C. King, Editors, p. 115, Physical Electronics Eden Prairie, Minnesota (1995)
- RuO2: Ru 3d: 280, 66 eV; T. P. Luxton, M. J. Eick, K. G. Schekel; Journal of Colloid and Interface Science 359, (2011) 30-39
- RuO3: Ru 3d: 282, 5 eV; T. P. Luxton, M. J. Eick, K. G. Schekel ; Journal of Colloid and Interface Science 359, (2011) 30-39
   RuO3: Ru 3d: 282,4 eV; R. Kötz, H. J. Lewerenz and S. Stucki; J. Electrochem. Soc. 130, No. 4, 1983, 825-829.

Neben der nasschemischen 2-stufigen Ru-Abscheidung auf Silber wurden Ruthenium und Silber auch durch PVD-Beschichtung auf einer PE-Folie aufgebracht, was den Vorteil hat, dass auf den PVD-Proben kein Silberchlorid vorliegt und möglicherweise festgestellte Unterschiede zweifelsfreier auf das Ruthenium-Halbelement zurückgeführt werden können.
(A) PVD-Abscheidung:
   - **(a)** Ruthenium-Sputtern auf Silber (Probenbezeichnung "Ru")
   - **(b)** Reaktives Sputtern (O₂) von Silber und Ruthenium (Probenbezeichnung "RuOx")
(B) Chemisch-reduktive Ruthenium Abscheidung:
   - **(c)** direkte Reduktion zur Ruthenium-Abscheidung auf Silber (Probenbezeichnung "825")
   - **(d)** Reduktion von Ruthenium zur Abscheidung auf Silber in dem bereits beschriebenen 2-stufigen Verfahren (Oxidation + anschließende Reduktion, (Probenbezeichnung "392").

Diese 4 Proben wurden anhand von Wachstumskurven und der Oberflächenzusammensetzung (XPS-Analyse) untersucht. Als Ergebnis hat sich gezeigt, dass bei beiden Untersuchungen Unterschiede innerhalb der jeweiligen Gruppe (A) bzw. (B), aber auch zwischen den Gruppen (A) und (B) aufgetreten sind, wobei eine erhöhte antimikrobielle Effizienz mit einer auffälligen Unterscheidung in der Oberflächenzusammensetzung, entsprechend der XPS-Analyse, korrespondierte.

**Figur 9** zeigt XPS-Spektren der Proben Ru (a), RuOx (b) sowie 825 (c), 392 (d). Antimikrobielle Untersuchungen hatten wie oben beschrieben gezeigt, dass sich bei der chemisch-reduktiven Abscheidung und der PVD-Abscheidung von Ru/RuOx//Ag/AgCl bzw. AgOx-Halbelement-Kombinationen deutliche Unterschiede ergeben. Die XPS-Analysen zeigen in auffallender Weise Unterschiede, die mit den unterschiedlichen antimikrobiellen Wirksamkeiten korrespondieren. Wie in den Ru3d-Spektren (Figur 9) zu sehen, gibt es sowohl bei der Gruppe chemisch-reduktiv hergestellter Proben **825 (c)** (Kurve **(1)), 392 (d)** (Kurve **(2))** als auch der Gruppe der PVD-beschichteten Proben **Ru (a)** (Kurve **(3)), RuOx (b)** (Kurve **(4))** innerhalb einer Gruppe als auch zwischen den beiden Gruppen folgende auffällige Unterschiede:
- Bei der **Probe 825** (a) Kurve 1 wird ein schmales Signal vom metallischen Ruthenium (BE = 280,1 eV) gefunden. Das Spektrum der **Probe Ru** besteht zum größten Teil (65 %) aus metallischem Ruthenium und ca. 24 % werden dem RuO2 zugeordnet.
- Die Probe **RuOx (b)** (Kurve **(4)** - PVD-oxidierend gesputtert) enthält deutlich weniger Ru(0), wodurch die Kohlenstoffanteile deutlicher hervortreten. Die größte Komponente (BE = 284,4 eV) wäre Metallcarbid zuzuordnen (C stammt offenbar aus PVD-Reinigung der PE-Folie). Der Rutheniumanteil am Spektrum wird von dem Signal bei BE = 282,1 eV bestimmt, das etwa 85 % ausmacht und RuO3** zugeordnet werden kann. Die Halbwertsbreite dieser Komponente ist recht groß, so dass ein Beitrag weiterer Verbindungen zu dem Signal nicht auszuschließen ist. Die übrigen Ru-Anteile des Spektrums werden von Oxidhydraten des Ru(VI) oder höheren Oxidationstufen des Rutheniums verursacht.
   Die Probe **392 (d)** Kurve **(2)** ähnelt der Probe **RuOx (b)** Kurve **4** und enthält ebenfalls RuO3** in deutlicher Konzentration. Darüber hinaus sind jedoch weitere Verbindungen vorhanden, bei denen es sich um Oxidhydrate handeln kann. Aber es sind auch Ru-Verbindungen mit größerer Wertigkeit möglich. Der Ru(0)- und RuO2-Anteil ist klein.
   ***) Nach Literaturangaben (Tabelle 1) wird zwischen* 282,2 *eV und 282,6 eV **RuO₃** verortet.*

In den Sauerstoff-O1s-Spektren **(****Figur 10****)** sieht man eine Gruppierung der Proben, wie sie für die Ru3d-Spektren beschrieben wurden. Die Proben **Ru** und **825** ergeben praktisch identische Spektrenformen, die mit drei Komponenten angeglichen werden können. Bei BE = 530 eV werden Metalloxide erwartet. Die Komponenten bei größerer BE können Hydroxide und Hydrate repräsentieren. Allerdings sind aller Wahrscheinlichkeit nach wesentliche Anteile davon Adsorbaten zuzuordnen. Die Probe **RuOx** ist wohl wesentlich von den Adsorbaten beeinflusst. Daneben sind die O-Atome in den Rutheniumoxiden zu sehen. Die Probe **392** zeigt nur geringe Anteile an oxidischen Sauerstoffatomen.

Der überwiegende Anteil ist in Hydraten gebunden. Dazwischen sind wohl noch Hydroxide zu finden.

Die **XPS-Analysen** zeigen mehrere Unterschiede in der oxydischen Zusammensetzung der untersuchten Proben. Auffallend, und möglicherweise für die erhöhte antimikrobielle Wirksamkeit ein Hauptverantwortlicher, könnte das Vorhandensein der sechswertigen Oxidationsstufe des Rutheniums, neben dem RuO₂ und dem metallischen Ru(0), in den Proben mit einer hohen antimikrobiellen Wirksamkeit sein. Insbesondere in den PVD-Proben, bei denen kein AgCl enthalten ist, kann von dieser Seite kein Einfluss auf eine Erhöhung der antimikrobiellen Wirksamkeit vorhanden sein.

### Literatur

Barcikowski, St. (Center for Nanointegration, Uni Duisburg-Essen) und Stiesch, M. (Medizinische Hochschule Hannover): FAQ: Silber ist doch kein gut verträglicher Bakterienkiller: Interview zur Vorstellung der Studie "Das entzauberte Edelmetall"; 12. 9. 2012.
Berthet A, Spring P, Vernez D, Plateel G, Hopf NB. Ex vivo human skin permeation of methylchloroisothiazolinone (MCI) and methylisothiazolinone (MI). Arch Toxicol. 2017. https://doi.org/10.1007/s00204-017-1978-x PMID: 28470404.
Burd A, Kwok CH, Hung SC, Chan HS, Gu H, Lam WK, Huang L: A comparative study of the cytotoxicity of silver-based dressings in monolayer Cell, tissue explant, and animal models. Wound Repair Regen 2007 Jan- Feb;15(1): 94-104.
Demling, R. H. und DeSanti, L.: Wunden - Ein Kompendium der klinischen Forschung und Praxis Band 13, Nummer 1 Januar/Februar 2001, Ergänzungsband A: "Die Auswirkungen von Silber auf das Wundmanagement.
Edwards R and Harding K.G.: Bacteria and wound healing: Curr Opin Infect Dis 17:91-96, 2004.
Guggenbichler JP, Kramer A, Reichwagen S. Metalle und Metallverbindungen. In: Kramer A, Assadian O, editors. Wallhäußers Praxis der Sterilisation, Desinfektion, Antiseptik und Konservierung. Stuttgart: Thieme. 2008; p 841-852.
Innes ME, Umraw N, Fish JS, Gomez M, Cartotto RC. The use of silvercoated dressings on donor side wounds: a prospective, controlled matched pair study. Burns 2001; 27(6): 621-627.
Rancan F, Amselgruber S, Hadam S, Munier S, Pavot V, Verrier B, et al. Particlebased transcutaneous administration of HIV-1 p24 protein to human skin explants and targeting of epidermal antigen presenting cells. J Control Release. 2014; 176:115±22. https://doi.org/10.1016/j.jconrel.2013.12.022 PMID: 24384300.
Rancan F, Giulbudagian M, Jurisch J, Blume-Peytavi U, Calderon M, Vogt A. Drug delivery across intact and disrupted skin barrier: Identification of cell populations interacting with penetrated thermoresponsive nanogels. Eur J Pharm Biopharm. 2017; 116:4±11. https://doi.org/10.1016/j.ejpb.2016.11.017 PMID: 27865989.
Rancan, F.: Private Mitteilungen, 2019
Safferling, K., Sütterlin,Th., Westphal, K., Ernst, C., Breuhahn, K., James, M., Jäger, D., Halama, N., Grabe, N.: Wound healing revised: A novel reepithelialization mechanism revealed by in vitro and in silico models: J Cell Biol (2013) 203 (4): 691-709.
Schaudinn, Ch., Dittmann, Ch., Jurisch,J., Laue, M., GuÈnday-TuÈ reli, N., Blume-Peytavi, U., Vogt, A., Rancan, F.: Development, standardization and testing of a bacterial wound infection model based on ex vivo human skin; PLOS ONE November 15, 2017.
Sen, C.K., Gordillo, G. M., Roy, S., Kirsner, R., Lambert, L., Hunt, TK, et.al.: Human skin wounds: A major and snowballing threat to public health and the economy. Wound Repair Regen. 2009; 17 (6): 763-71https://doi.org/11.11/j.1524-475X.2009.00543.x PMID:19903300; PubMed Central PMCID: PMCPPMC2810192.
Thompson BC, Halliday GM, Damian DL. Nicotinamide enhances repair of arsenic and ultraviolet radiation-induced DNA damage in HaCaT keratinocytes and ex vivo human skin. PLoS One. 2015; 10(2): e0117491. https://doi.org/10.1371/journal.pone.0117491 PMID: 25658450; PubMed Central PMCID: PMCPMC4319842
Van den Plas D., De Smet K., Lens D. and Sollie P.: Differential cell death programmes induced by silver dressings in vitro; European journal of dermatology: EJD · July 2008

## Patentansprüche

1. Hybride Wundauflage (1, 10, 20) zur Behandlung von Wunden der menschlichen oder tierischen Haut, die mindestens ein Trägermaterial (2, 12, 21) umfasst, das zumindest teilweise mit mindestens einem antiseptischen Mittel versehen ist, **dadurch gekennzeichnet, dass** das antiseptische Mittel zumindest eine erste und eine zweite Metallverbindung umfasst, wobei die erste Metallverbindung mindestens eine halbleitende Verbindung mindestens eines Übergangsmetallelements umfasst, das über mehrere Oxydationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die erste Metallverbindung ein erstes Halbelement eines galvanischen Elementes bildet und die zweite Metallverbindung ein zweites Halbelement des galvanischen Elementes bildet, und wobei die beiden Metallverbindungen zumindest mit ihren jeweiligen Oberflächen miteinander in elektrisch leitendem Kontakt stehen und dadurch eine antiseptische Wirkung entfalten, und wobei die Übergangsmetallverbindung des ersten Halbelements Ruthenium, das in einer oder beiden der Oxidationsstufen VI und IV vorliegt, umfasst.

2. Hybride Wundauflage nach Anspruch 1, **dadurch gekennzeichnet, dass** das Trägermaterial (2, 12, 21) eine Netz-, Loch-, Poren-, Faser- oder Gewebestruktur aufweist.

3. Hybride Wundauflage nach Anspruch 1 oder 2, **dadurch gekennzeichnet, dass** diese zusätzlich eine Flüssigkeit aufnehmende Schicht umfasst, vorzugsweise textile Flächenware, bevorzugt aus einem Vlies, Gewebe, Gewirk oder Filz.

4. Hybride Wundauflage nach einem der Ansprüche 1 bis 3, **dadurch gekennzeichnet, dass** das Trägermaterial (2, 12, 21) zumindest auf einer zur Wunde gerichteten Seite mit dem antiseptischen Mittel versehen ist und dass die Wundauflage zusätzlich eine Flüssigkeit aufnehmende Schicht umfasst, die auf der gegenüber liegenden, von der Wunde abgewandten Seite des Trägermaterials (2, 12, 21) angeordnet ist.

5. Hybride Wundauflage nach einem der Ansprüche 1 bis 4, **dadurch gekennzeichnet, dass** das antiseptische Mittel mindestens zwei unterschiedliche Schichten umfasst, wobei ein erstes Metall, welches die erste Metallverbindung umfasst, als clusterförmige, nanoporöse und/oder mikrorissige Schicht zumindest teilweise auf eine Schicht eines zweiten Metalls, welches die zweite Metallverbindung umfasst, aufgebracht ist, oder wobei ein zweites Metall, welches die zweite Metallverbindung umfasst, als clusterförmige, nanoporöse und/oder mikrorissige Schicht zumindest teilweise auf eine Schicht eines ersten Metalls, welches die erste Metallverbindung umfasst, aufgebracht ist.

6. Hybride Wundauflage nach einem der Ansprüche 1 bis 4, **dadurch gekennzeichnet, dass** das antiseptische Mittel einzelne Partikel umfasst, wobei mindestens ein Partikel die erste und die zweite Metallverbindung umfasst, und/oder wobei mindestens ein Partikel die erste Metallverbindung und mindestens ein anderes Partikel die zweite Metallverbindung umfasst.

7. Hybride Wundauflage nach einem der Ansprüche 1 bis 6, **dadurch gekennzeichnet, dass** die erste Metallverbindung mindestens ein Metalloxid, Metalloxyhydrat, Metallhydroxid, Metalloxyhydroxid, Metallhalogenid und/oder mindestens ein Metallsulfid des Übergangsmetallelements umfasst.

8. Hybride Wundauflage nach einem der Ansprüche 1 bis 7, **dadurch gekennzeichnet, dass** der Silberhalbleiter mindestens ein Silberoxid, Silberhydroxyd, Silberhalogenid und/oder Silbersulfid umfasst.

9. Hybride Wundauflage nach einem der Ansprüche 1 bis 8, **dadurch gekennzeichnet, dass** das antiseptische Mittel mit einer Protein abweisenden Beschichtung, insbesondere in Richtung Wunde, versehen ist.

10. Antiseptisches Mittel, das zumindest eine erste und eine zweite Metallverbindung umfasst, wobei die erste Metallverbindung mindestens eine halbleitende Verbindung mindestens eines Übergangsmetallelements umfasst, das über mehrere Oxydationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die erste Metallverbindung ein erstes Halbelement eines galvanischen Elementes bildet und die zweite Metallverbindung ein zweites Halbelement des galvanischen Elementes bildet, und wobei die beiden Metallverbindungen zumindest mit ihren jeweiligen Oberflächen miteinander in elektrisch leitendem Kontakt stehen, und wobei die Übergangsmetallverbindung des ersten Halbelements Ruthenium umfasst, das in einer oder beiden der Oxidationsstufen VI und IV vorliegt, zur Verwendung bei der Behandlung von Wunden der menschlichen oder tierischen Haut.

## Claims

1. Hybrid wound dressing (1, 10, 20) for treating wounds of human or animal skin, which comprises at least one carrier material (2, 12, 21) which is at least partially provided with at least one antiseptic agent, **characterised in that** the antiseptic agent comprises at least a first and a second metal compound, the first metal compound comprising at least one semiconducting compound of at least one transition metal element which has a plurality of oxidation states and allows the oxidation states to be changed via catalytically active centres, and the second metal compound comprises at least one electrically conductive silver semiconductor, wherein the first metal compound forms a first half-element of a galvanic element and the second metal compound forms a second half-element of the galvanic element, and wherein the two metal compounds are in electrically conductive contact with each other at least with their respective surfaces and thereby develop an antiseptic effect, and wherein the transition metal compound of the first half-element comprises ruthenium which is present in one or both of the oxidation states VI and IV.

2. Hybrid wound dressing according to claim 1, **characterised in that** the carrier material (2, 12, 21) has a net, hole, pore, fibre or fabric structure.

3. Hybrid wound dressing according to claim 1 or 2, **characterised in that** it additionally comprises a liquid-absorbing layer, preferably a textile fabric, preferably made of a non-woven, woven, knitted or felt.

4. Hybrid wound dressing according to any one of claims 1 to 3, **characterised in that** the carrier material (2, 12, 21) is provided with the antiseptic agent at least on one side facing the wound and **in that** the wound dressing additionally comprises a liquid-absorbing layer which is arranged on the opposite side of the carrier material (2, 12, 21) facing away from the wound.

5. Hybrid wound dressing according to any one of claims 1 to 4, **characterised in that** the antiseptic agent comprises at least two different layers, wherein a first metal comprising the first metal compound is applied as a clustered, nanoporous and/or microcracked layer at least partially on a layer of a second metal comprising the second metal compound, or wherein a second metal comprising the second metal compound is applied as a clustered, nanoporous and/or microcracked layer at least partially on a layer of a first metal comprising the first metal compound.

6. Hybrid wound dressing according to any one of claims 1 to 4, **characterised in that** the antiseptic agent comprises individual particles, wherein at least one particle comprises the first and the second metal compound, and/or wherein at least one particle comprises the first metal compound and at least one other particle comprises the second metal compound.

7. Hybrid wound dressing according to any one of claims 1 to 6, **characterised in that** the first metal compound comprises at least one metal oxide, metal oxyhydrate, metal hydroxide, metal oxyhydroxide, metal halide and/or at least one metal sulphide of the transition metal element.

8. Hybrid wound dressing according to one of claims 1 to 7, **characterised in that** the silver semiconductor comprises at least one silver oxide, silver hydroxide, silver halide and/or silver sulphide.

9. Hybrid wound dressing according to any one of claims 1 to 8, **characterised in that** the antiseptic agent is provided with a protein-repellent coating, in particular in the direction of the wound.

10. Antiseptic agent comprising at least a first and a second metal compound, wherein the first metal compound comprises at least one semiconducting compound of at least one transition metal element which has several oxidation states and allows a change of oxidation states via catalytically active centres, and the second metal compound comprises at least one electrically conductive silver semiconductor, wherein the first metal compound forms a first half-element of a galvanic element and the second metal compound forms a second half-element of the galvanic element, and wherein the two metal compounds are in electrically conductive contact with each other at least with their respective surfaces, and wherein the transition metal compound of the first half-element comprises ruthenium which is present in one or both of oxidation states VI and IV for use in the treatment of wounds of human or animal skin.

## Revendications

1. Pansement hybride (1, 10, 20) pour le traitement de plaies de la peau humaine ou animale, comprenant au moins un matériau de support (2, 12, 21) qui est au moins partiellement pourvu d'au moins un agent antiseptique, **caractérisé en ce que** l'agent antiseptique comprend au moins un premier et un deuxième composé métallique, le premier composé métallique comprenant au moins un composé semi-conducteur d'au moins un élément métallique de transition qui dispose de plusieurs degrés d'oxydation et permet un changement des degrés d'oxydation via des centres catalytiquement actifs, et le deuxième composé métallique comprenant au moins un semi-conducteur d'argent électriquement conducteur, le premier composé métallique formant un premier demi-élément d'un élément galvanique et le deuxième composé métallique formant un deuxième demi-élément de l'élément galvanique, et les deux composés métalliques étant en contact électriquement conducteur l'un avec l'autre au moins par leurs surfaces respectives et déployant ainsi un effet antiseptique, et le composé de métal de transition du premier demi-élément comprenant du ruthénium, qui est présent dans l'un des états d'oxydation VI et IV ou dans les deux.

2. Pansement hybride selon la revendication 1, **caractérisé en ce que** le matériau de support (2, 12, 21) présente une structure réticulée, perforée, poreuse, fibreuse ou tissée.

3. Pansement hybride selon la revendication 1 ou 2, **caractérisé en ce qu'**il comprend en outre une couche absorbant les liquides, de préférence un tissu plat textile, de préférence en un non-tissé, un tissu, un tricot ou un feutre.

4. Pansement hybride selon l'une des revendications 1 à 3, **caractérisé en ce que** le matériau de support (2, 12, 21) est pourvu de l'agent antiseptique au moins sur une face orientée vers la plaie et **en ce que** le pansement comprend en outre une couche absorbant les liquides, qui est disposée sur la face opposée du matériau de support (2, 12, 21), qui est éloignée de la plaie.

5. Pansement hybride selon l'une quelconque des revendications 1 à 4, **caractérisé en ce que** l'agent antiseptique comprend au moins deux couches différentes, dans lequel un premier métal comprenant le premier composé métallique est appliqué sous la forme d'une couche en forme de grappe, nanoporeuse et/ou microfissurée au moins partiellement sur une couche d'un deuxième métal comprenant le deuxième composé métallique, ou dans lequel un deuxième métal comprenant le deuxième composé métallique est appliqué sous la forme d'une couche en forme de grappe, nanoporeuse et/ou microfissurée au moins partiellement sur une couche d'un premier métal comprenant le premier composé métallique.

6. Pansement hybride selon l'une quelconque des revendications 1 à 4, **caractérisé en ce que** l'agent antiseptique comprend des particules individuelles, dans lequel au moins une particule comprend le premier et le second composés métalliques, et/ou dans lequel au moins une particule comprend le premier composé métallique et au moins une autre particule comprend le second composé métallique.

7. Pansement hybride selon l'une quelconque des revendications 1 à 6, **caractérisé en ce que** le premier composé métallique comprend au moins un oxyde métallique, un oxyhydrate métallique, un hydroxyde métallique, un oxyhydroxyde métallique, un halogénure métallique et/ou au moins un sulfure métallique de l'élément métallique de transition.

8. Pansement hybride selon l'une quelconque des revendications 1 à 7, **caractérisé en ce que** le semi-conducteur d'argent comprend au moins un oxyde d'argent, un hydroxyde d'argent, un halogénure d'argent et/ou un sulfure d'argent.

9. Pansement hybride selon l'une quelconque des revendications 1 à 8, **caractérisé en ce que** l'agent antiseptique est pourvu d'un revêtement repoussant les protéines, en particulier en direction de la plaie.

10. Agent antiseptique comprenant au moins un premier et un deuxième composé métallique, le premier composé métallique comprenant au moins un composé semi-conducteur d'au moins un élément de métal de transition qui dispose de plusieurs niveaux d'oxydation et permet un changement des niveaux d'oxydation via des centres catalytiquement actifs, et le deuxième composé métallique comprenant au moins un semi-conducteur d'argent électriquement conducteur, dans lequel le premier composé métallique forme un premier demi-élément d'un élément galvanique et le second composé métallique forme un second demi-élément de l'élément galvanique, et dans lequel les deux composés métalliques sont en contact électriquement conducteur l'un avec l'autre au moins par leurs surfaces respectives, et dans lequel le composé métallique de transition du premier demi-élément comprend du ruthénium qui est présent dans l'un des états d'oxydation VI et IV ou dans les deux, pour une utilisation dans le traitement de plaies de la peau humaine ou animale.
